# EUROPEAN PATENT APPLICATION

(11) **EP 4 301 026 A1**
(43) Date of publication of application: **03.01.2024**
(21) Application number: 22787440.1
(22) Date of filing: 08.04.2022
(51) Int. Cl.: H04W 24/02

(54) **COMMUNICATION METHOD AND DEVICE**

(30) Priority: 15.04.2021 CN 202110406269
(71) Applicant: Huawei Technologies Co., Ltd., Shenzhen, Guangdong 518129 (CN)
(72) Inventor: HU, Xingxing, Shenzhen, Guangdong 518129 (CN); GENG, Tingting, Shenzhen, Guangdong 518129 (CN)
(74) Representative: Körber, Martin Hans
(86) International application number: PCT/CN2022/085734
(87) International publication number: WO 2022/218214

(57) **Abstract**

This application provides a communication method and apparatus. The communication method includes: User equipment performs application layer measurement and access stratum measurement on a first service in an idle state or an inactive state, to obtain a first measurement result and a second measurement result, where the first measurement result includes an application layer measurement result obtained by the user equipment in a first time period, the second measurement result includes an access stratum measurement result obtained by the user equipment in a second time period, and the first time period overlaps the second time period. The user equipment in a connected state sends the first measurement result and the second measurement result to a first network device, where there is a correspondence between the first measurement result and the second measurement result. In this way, a configuration of a network can be targetedly optimized based on the correspondence, and user experience is improved.

## Description

This application claims priority to Chinese Patent Application No. 202110406269.X, filed with the China National Intellectual Property Administration on April 15, 2021 and entitled "COMMUNICATION METHOD AND APPARATUS", which is incorporated herein by reference in its entirety.

### TECHNICAL FIELD

This application relates to the communication field, and more specifically, to a communication method and apparatus.

### BACKGROUND

With rapid development of wireless communication technologies, some streaming services or voice services such as streaming media services and multimedia telephony services for IP multimedia subsystem (multimedia telephony services for IP multimedia subsystem, MTSI) have increasingly high requirements on user experience.

Based on the current technologies, when a user initiates a data service, an operator performs quality of experience (Quality of Experience, QoE) measurement collection on the user to obtain user experience, to perform network optimization and improve user experience. The operator may further monitor corresponding wireless network quality, and further determine, based on a result of the monitoring, whether user experience is affected, so that the operator may targetedly optimize a configuration of a radio access network (radio access network, RAN).

However, the current technologies have disadvantages. When the user is in a non-connected state or discontinuously reports a measurement result, a quality of experience measurement result cannot be associated with a wireless network quality monitoring result. This hinders optimization of user experience.

Therefore, a communication method is urgently needed to improve user experience.

### SUMMARY

This application provides a communication method and apparatus, so that when a user is in a non-connected state or discontinuously reports a measurement result, a quality of experience measurement result can be associated with a wireless network quality monitoring result. In this way, a configuration of a RAN can be targetedly optimized, and user experience is improved.

According to a first aspect, a communication method is provided, including: User equipment performs application layer measurement and access stratum measurement on a first service in an idle state or an inactive state, to obtain a first measurement result and a second measurement result, where the first measurement result includes an application layer measurement result obtained by the user equipment in a first time period, the second measurement result includes an access stratum measurement result obtained by the user equipment in a second time period, and the first time period overlaps the second time period. The user equipment in a connected state sends the first measurement result and the second measurement result to a first network device, where there is a correspondence between the first measurement result and the second measurement result.

According to the communication method provided in this embodiment of this application, the user equipment performs QoE measurement and AS measurement on a specified service in the idle state or the inactive state, to obtain a QoE measurement result and an AS measurement result, where there is a correspondence between the QoE measurement result and the AS measurement result; and sends the QoE measurement result and the AS measurement result to an access network device, and the access network device further sends the QoE measurement result and the AS measurement result to a core network, so that a configuration of a RAN is targetedly optimized, and user experience is improved.

In a possible implementation, the first measurement result is a measurement result obtained by an upper layer of an access stratum in a first time period, and the second measurement result is a measurement result obtained by the upper layer of the access stratum in a second time period. The first time period and the second time period may be a completely overlapping time period, or may be a partially overlapping time period. That is, the first measurement result and the second measurement result may be obtained through measurement in a same time range, or may be obtained through measurement in a time range in which the two time periods overlap.

In a possible implementation, the user equipment receives configuration information sent by the access network device, where the configuration information includes a QoE measurement configuration, and may further include AS measurement result storage indication information, and the AS measurement result storage indication information specifically includes a storage periodicity of the AS measurement result and/or a storage condition of the AS measurement result. For example, only when the AS measurement result is lower than a threshold, the user equipment stores the AS measurement result.

In a possible implementation, the configuration information received by the user equipment further includes duration, and the upper layer of the access stratum of the user equipment performs QoE measurement within the duration.

It should be noted that, the duration is a time period determined by the access network device based on a service type or a status of the access network device, and the QoE measurement is completed within the time period, so that power consumption of the user equipment can be controlled.

In a possible implementation, the access network device may send the configuration information to the user equipment by using a broadcast message or a dedicated RRC message.

For example, the dedicated RRC message is an RRC release message or an RRC reconfiguration message.

In a possible implementation, the second measurement result includes information corresponding to the QoE measurement.

The information corresponding to the QoE measurement includes one of the following: a service type such as a streaming service, an MTSI, or a VR service corresponding to the QoE measurement that has been started by UE #1, slices in the service type that have started QoE measurement, for example, carrying an S-NSSAI, a record session indication, and the like. The record session indication may be a character string. In addition, the upper layer of the access stratum of the UE #1 generates different record session indications for different sessions. That is, different sessions correspond to different record session indications.

In a possible implementation, the second measurement result includes coexistence (In-Device Coexistence, IDC) information.

Specifically, when recording the AS measurement result, if detecting an in-device coexistence (In-Device Coexistence, IDC) problem, the user equipment adds the IDC information to the AS measurement result.

In a possible implementation, the upper layer of the access stratum may be an application layer, or a configured QoE measurement dedicated layer. The access stratum may be an RRC layer or another layer that performs AS measurement, for example, a packet data convergence protocol (Packet Data Convergence Protocol, PDCP) layer, a radio link control (Radio Link Control, RLC) layer, a media access control (Media Access Control, MAC) layer, or a physical layer (Physical Layer, PHY), or may be a configured AS measurement dedicated layer.

In a possible implementation, the correspondence may alternatively be an association relationship.

In a possible implementation, that the user equipment sends the first measurement result and the second measurement result that are in the correspondence means that the two measurement results are simultaneously sent, and the access network device receives the two measurement results that are simultaneously sent. By default, the two measurement results are in the correspondence.

With reference to the first aspect, in some implementations of the first aspect, the method further includes: The user equipment in the connected state sends first information to the first network device, where the first information indicates that there is the correspondence between the first measurement result and the second measurement result.

According to this technical solution, the first information sent by the user equipment indicates that there is the correspondence between the sent first measurement result and the sent second measurement result, the access network device determines, based on the first information, that there is the correspondence between the received first measurement result and the received second measurement result, and the access network device may directly send the two measurement results to a core network device without further determining, to further optimize a configuration. In this solution, the user equipment does not need to send the time identifier to the access network device, so that signaling consumption between the user equipment and the access network device is further reduced.

With reference to the first aspect, in some implementations of the first aspect, the method further includes: The user equipment determines that there is the correspondence between the first measurement result and the second measurement result.

According to this technical solution, the user equipment determines that there is the correspondence between the first measurement result and the second measurement result, and then sends the two measurement results to the access network device, so that the access network device sends the two measurement results to the core network device for directly optimizing the configuration of the RAN.

With reference to the first aspect, in some implementations of the first aspect, the method further includes: Before determining that there is the correspondence between the first measurement result and the second measurement result, the user equipment determines a first time identifier and a second time identifier, where the first time identifier is moment information sent by an upper layer of an access stratum to the access stratum of the user equipment when the access stratum of the user equipment receives the first measurement result from the upper layer of the access stratum, the second time identifier is moment information recorded when a terminal device obtains the second measurement result, the first time identifier is used to determine a time period corresponding to the first measurement result, and the second time identifier is used to determine a time period corresponding to the second measurement result.

In a possible implementation, when the user equipment sends the first measurement result and the second measurement result, the first time identifier and the second time identifier are respectively carried. The first measurement result and the second measurement result may be simultaneously sent, or may be separately sent. This does not affect implementation of this embodiment of this application.

According to this technical solution, when performing first measurement and the second measurement, the user equipment determines the time periods corresponding to the first measurement result and the second measurement result, to further provide a basis for the user equipment to determine whether there is the correspondence, so that the user equipment accurately associates the measurement results. Further, the user equipment may alternatively directly send time information corresponding to the first measurement result and the second measurement result to the access network device, and the access network device or the core network device determines the correspondence between the first measurement result and the second measurement result.

In a possible implementation, in QoE measurement performed on a service, QoE measurement may be separately performed on a plurality of sessions, and different sessions need to be distinguished from each other. Therefore, a correspondence needs to be further determined with reference to information corresponding to the QoE measurement to perform association.

With reference to the first aspect, in some implementations of the first aspect, the method further includes: The user equipment determines, based on the first time identifier and the second time identifier, that there is the correspondence between the first measurement result and the second measurement result.

According to this technical solution, after determining the time periods corresponding to the first measurement result and the second measurement result, the user equipment directly determines, depending on whether the time periods correspond to each other, whether there is the correspondence between the first measurement result and the second measurement result.

With reference to the first aspect, in some implementations of the first aspect, the method further includes: The user equipment receives periodicity information sent by a second network device, where the periodicity information includes a periodicity in which the user equipment performs application layer measurement on the first service. The user equipment determines, based on the periodicity information, a time period corresponding to the first measurement result.

According to this technical solution, the access network device may further provide a QoE measurement periodicity to the user equipment, and QoE measurement is performed based on the periodicity. The user equipment may determine, based on periodicity information, a time period corresponding to the first measurement result, and further determine a second measurement result obtained within the time period.

With reference to the first aspect, in some implementations of the first aspect, the method further includes: The access stratum of the user equipment starts access stratum measurement after receiving first indication information from the upper layer of the access stratum, where the first indication information is session start indication information of the first service.

According to this technical solution, after the service starts, the upper layer of the access stratum of the user equipment sends the received session start indication information of the service to the access stratum, to trigger the access stratum to start to perform AS measurement. According to this technical solution, it can be ensured that the user equipment performs application layer measurement and access stratum measurement in a same time period, so that a correlation between the first measurement result and the second measurement result is ensured.

With reference to the first aspect, in some implementations of the first aspect, the method further includes: When an access stratum of the user equipment receives the first measurement result from an upper layer of the access stratum, the access stratum of the user equipment uses a second measurement result generated between receiving an application layer measurement result last time and receiving the first measurement result as the second measurement result; or an access stratum of the user equipment uses a second measurement result generated between receiving first indication information and receiving the first measurement result as the second measurement result.

According to this technical solution, when performing application layer measurement, the user equipment generates the first measurement result, and immediately sends the first measurement result to the access stratum, and the access stratum may associate the second measurement result based on a sequence of receiving the first measurement result. In this solution, a resource waste caused by storing the time information can be avoided, and the user equipment may directly associate the measurement result.

With reference to the first aspect, in some implementations of the first aspect, the method further includes: The access stratum of the user equipment in the connected state sends second indication information to the upper layer of the access stratum, where the second indication information indicates that the user equipment enters the connected state or indicates the upper layer of the access stratum to transmit the first measurement result.

According to this technical solution, when the user equipment enters the connected state, the access network device may immediately notify the upper layer of the access stratum by using the indication information, and the upper layer of the access stratum reports the first measurement result. In this solution, the user equipment can immediately associate or report the measurement result after entering the connected state, so that accumulation of the measurement results is avoided, and communication efficiency is improved.

With reference to the first aspect, in some implementations of the first aspect, the method further includes: After the user equipment enters the connected state, the access stratum of the user equipment in the connected state sends third indication information to the first network device, where the third indication information indicates that measurement configuration information for performing first measurement in the idle state or the inactive state is configured for the user equipment. The first network device configures, for the user equipment, a radio signaling bearer for transmitting the first measurement result. The access stratum of the user equipment sends fourth indication information to the upper layer of the access stratum, where the fourth indication information indicates the upper layer of the access stratum to transmit the first measurement result.

According to this technical solution, when the user equipment enters the connected state, the access network device may immediately configure, for the user equipment, the radio signaling bearer for transmitting the first measurement result, and the access stratum then indicates the upper layer of the access stratum to report the first measurement result. In this solution, the user equipment can immediately associate or report the measurement result after entering the connected state, so that accumulation of the measurement results is avoided, and communication efficiency is improved.

In a possible implementation, the first network device and the second network device may be a same network device, or may be different network devices.

According to a second aspect, a communication method is provided, including: A first network device receives a first measurement result and a second measurement result that are of a first service and that are sent by user equipment, where the first measurement result includes an application layer measurement result obtained by the user equipment in a first time period in an idle state or an inactive state, the second measurement result includes an access stratum measurement result obtained by the user equipment in a second time period in the idle state or the inactive state, and the first time period overlaps the second time period. The first network device sends the first measurement result and the second measurement result, where there is a correspondence between the first measurement result and the second measurement result.

According to the communication method provided in this embodiment of this application, the access network device receives the first measurement result and the second measurement result that are in the correspondence, and sends the first measurement result and the second measurement result to a core network, so that a configuration of a RAN is targetedly optimized, and user experience is improved.

In a possible implementation, the first network device sends configuration information, where the configuration information includes a QoE measurement configuration, and may further include AS measurement result storage indication information, and the AS measurement result storage indication information specifically includes a storage periodicity of the AS measurement result and/or a storage condition of the AS measurement result. For example, only when the AS measurement result is lower than a threshold, the user equipment stores the AS measurement result.

In a possible implementation, the configuration information sent by the first network device further includes duration, and an upper layer of an access stratum of the user equipment performs QoE measurement within the duration.

It should be noted that, the duration is a time period determined by the access network device based on a service type of the user equipment or a status of the access network device, and the QoE measurement is completed within the time period, so that power consumption of the user equipment can be controlled.

In a possible implementation, the access network device may send the configuration information to the user equipment by using a broadcast message or a dedicated RRC message.

For example, the dedicated RRC message is an RRC release message or an RRC reconfiguration message.

In a possible implementation, the access network device may further send a QoE measurement periodicity to the user equipment, and QoE measurement is performed based on the periodicity. The user equipment may determine, based on periodicity information, a time period corresponding to the first measurement result, and further determine a second measurement result obtained within the time period.

With reference to the second aspect, in some implementations of the second aspect, the method further includes: The first network device receives first information, where the first information indicates that there is the correspondence between the first measurement result and the second measurement result.

According to this technical solution, the access network device receives the first information, the access network device determines, based on the first information, that there is the correspondence between the received first measurement result and the received second measurement result, and the access network device may directly send the two measurement results to a core network device without further determining, to further optimize a configuration. In this solution, the user equipment does not need to send a time identifier to the access network device, so that signaling consumption between the user equipment and the access network device is further reduced.

With reference to the second aspect, in some implementations of the second aspect, the method further includes: The access network device determines that there is the correspondence between the first measurement result and the second measurement result.

According to this technical solution, when the first measurement result and the second measurement result that are received by the access network device respectively carry corresponding time identifiers, the access network device may determine, based on time information carried in the measurement results, that there is the correspondence between the first measurement result and the second measurement result, and further send the correspondence to the core network device, to optimize the configuration of the RAN.

With reference to the second aspect, in some implementations of the second aspect, the method further includes: The first network device receives third indication information sent by an access stratum of the user equipment, where the third indication information indicates that measurement configuration information for performing first measurement in the idle state or the inactive state is configured for the user equipment. The first network device configures, for the user equipment, a radio signaling bearer for transmitting the first measurement result.

According to this technical solution, when the user equipment enters a connected state, the access network device may immediately configure, for the user equipment, the radio signaling bearer for transmitting the first measurement result, and the access stratum then indicates the upper layer of the access stratum to report the first measurement result. In this solution, the user equipment can immediately associate or report the measurement result after entering the connected state, so that accumulation of the measurement results is avoided, and communication efficiency is improved.

According to a third aspect, a communication method is provided, including: User equipment performs application layer measurement and access stratum measurement on a first service. The user equipment generates a first measurement result and a first time identifier when suspending reporting of an application layer measurement result, where the first time identifier is a first time period corresponding to the first measurement result. The user equipment sends the first measurement result and the first time identifier when resuming the reporting of the application layer measurement result.

According to the communication method provided in this embodiment of this application, when suspending the reporting of the application layer measurement result in a connected state, the user equipment generates the first time identifier while generating the first measurement result, and after resuming the reporting of the measurement result, sends the first measurement result and the corresponding time identifier. The access network device is configured to determine the corresponding application layer measurement result based on the time identifier, and send the application layer measurement result and the first time identifier to a core network device to optimize a configuration of a RAN, so that user experience is improved.

According to a fourth aspect, a communication method is provided, including: A first network device receives a first measurement result and a first time identifier that are of a first service and that are sent by user equipment, where the first measurement result includes an application layer measurement result obtained by the user equipment in a first time period, and the first time identifier is a first time period corresponding to the first measurement result. The first network device sends the first measurement result and the first time identifier.

According to the communication method provided in this embodiment of this application, the access network device receives the first measurement result and the corresponding first time identifier that are sent by the user equipment, and sends the first measurement result and the first time identifier to a core network device. The core network device determines that there is a correspondence between the first measurement result and a second measurement result, and optimizes a configuration of a RAN, so that user experience is improved.

With reference to the fourth aspect, in some implementations of the fourth aspect, the method further includes: When the user equipment suspends reporting of the application layer measurement result, the first network device receives a second measurement result sent by the user equipment, and generates a second time identifier, where the second measurement result includes an application layer measurement result obtained by the user equipment in a second time period, the second time identifier is a second time period corresponding to the second measurement result, and the second time period overlaps the first time period. The first network device determines, based on the first time identifier and the second time identifier, that there is a correspondence between the first measurement result and the second measurement result.

According to this technical solution, the access network device determines, based on the time identifiers corresponding to the first measurement result and the second measurement result, that there is the correspondence between the first measurement result and the second measurement result. The correspondence is directly sent to the core network device, to further optimize a configuration of a RAN. In this solution, the access network device determines the correspondence, so that signaling transmission between different layers on a user equipment side is reduced, and system communication efficiency is improved.

With reference to the fourth aspect, in some implementations of the fourth aspect, the method further includes: The first network device sends the first measurement result and the second measurement result, where there is the correspondence between the first measurement result and the second measurement result.

According to this technical solution, the user equipment or the access network device directly sends a corresponding result to the core network device after determining that there is the correspondence between the first measurement result and the second measurement result, and the core network device directly optimizes a configuration of a RAN.

With reference to the fourth aspect, in some implementations of the fourth aspect, the method further includes: The first network device sends the second measurement result and the second time identifier.

According to this technical solution, the access network device may further send the second measurement result and the second time identifier to the core network device, so that the core network device determines, based on the second time identifier and the first time identifier, that there is the correspondence between the first measurement result and the second measurement result, and optimizes a configuration of a RAN. This improves user experience.

According to a fifth aspect, a communication method is provided, including: User equipment receives first configuration information and a first identifier that are of a first service; performs application layer measurement on the first service based on the first configuration information, to obtain a first measurement result; and sends the first measurement result and the first identifier to an access network device.

According to this technical solution provided in this embodiment, when a network side device provides different measurement collection entities for different customers or service providers, the access network device sends the corresponding identifier while sending a QoE measurement configuration to the user equipment, and the user equipment sends the corresponding identifier while sending a measurement result of the QoE measurement configuration to the access network device, so that the access network device determines, based on the measurement result and the corresponding identifier, a measurement collection entity corresponding to the measurement result. This ensures that the access network device can accurately determine the measurement collection entity corresponding to the measurement result, and reduces signaling overheads between the user equipment and the access network device.

According to a sixth aspect, a communication method is provided, including: A first network device sends first configuration information and a first identifier that are of a first service to user equipment; receives a first measurement result and the first identifier that are sent by the user equipment; and determines a first measurement collection entity based on a correspondence between the first identifier and a measurement collection entity, and sends the first measurement result to the first measurement collection entity.

According to this technical solution provided in this embodiment, when a network side device provides different measurement collection entities for different customers or service providers, the access network device sends the corresponding identifier while sending a QoE measurement configuration to the user equipment, and receives the corresponding identifier while receiving a measurement result that is of the QoE measurement configuration and that is sent by the user equipment, and the access network device determines, based on the measurement result and the corresponding identifier, a measurement collection entity corresponding to the measurement result, and sends the measurement result to the corresponding measurement collection entity. This ensures that the measurement collection entity receives the corresponding measurement result to perform subsequent processing, and reduces signaling overheads between the user equipment and the access network device.

According to a seventh aspect, a communication apparatus is provided, and the communication apparatus includes units that perform the method in the first aspect or the implementations of the first aspect.

Based on the foregoing solution, the communication apparatus performs the method in the first aspect or the implementations of the first aspect, so that when user equipment is in a non-connected state, a quality of experience measurement result (an application layer measurement result) can be associated with a wireless network quality monitoring result (an access stratum measurement result). In this way, a configuration of a RAN can be targetedly optimized, and user experience is improved.

According to an eighth aspect, a communication apparatus is provided, and the communication apparatus includes units that perform the method in the second aspect or the implementations of the second aspect.

Based on the foregoing solution, the communication apparatus performs the method in the second aspect or the implementations of the second aspect, so that when user equipment is in a non-connected state, a quality of experience measurement result (an application layer measurement result) can be associated with a wireless network quality monitoring result (an access stratum measurement result). In this way, a configuration of a RAN can be targetedly optimized, and user experience is improved.

According to a ninth aspect, a communication apparatus is provided, and the communication apparatus includes units that perform the method in the third aspect or the implementations of the third aspect.

Based on the foregoing solution, the communication apparatus performs the method in the third aspect or the implementations of the third aspect, so that when an application layer measurement result is discontinuously reported, a quality of experience measurement result (the application layer measurement result) can be associated with a wireless network quality monitoring result (an access stratum measurement result). In this way, a configuration of a RAN can be targetedly optimized, and user experience is improved.

According to a tenth aspect, a communication apparatus is provided, and the communication apparatus includes units that perform the method in the fourth aspect or the implementations of the fourth aspect.

Based on the foregoing solution, the communication apparatus performs the method in the fourth aspect or the implementations of the fourth aspect, so that when an application layer measurement result is discontinuously reported, a quality of experience measurement result (the application layer measurement result) can be associated with a wireless network quality monitoring result (an access stratum measurement result). In this way, a configuration of a RAN can be targetedly optimized, and user experience is improved.

According to an eleventh aspect, a communication apparatus is provided, including a memory and a processor. The memory is configured to store computer instructions, and the processor is configured to execute the computer instructions stored in the memory, so that the communication apparatus performs the communication method in the first aspect, the second aspect, the third aspect, or the fourth aspect, and the possible implementations of the first aspect, the second aspect, the third aspect, or the fourth aspect.

Based on the foregoing technical solution, the communication apparatus performs the method in the foregoing implementations, so that when a user is in a non-connected state or discontinuously reports a measurement result, a quality of experience measurement result can be associated with a wireless network quality monitoring result. In this way, a configuration of a RAN can be targetedly optimized, and user experience is improved.

Optionally, there are one or more processors, and there are one or more memories.

Optionally, the memory may be integrated with the processor, or the memory and the processor are separately disposed.

According to a twelfth aspect, a communication apparatus is provided, including one of user equipment, a first network device, and a second network device.

According to a thirteenth aspect, a computer-readable medium is provided. The computer-readable medium stores a computer program (also referred to as code or instructions). When the computer program is run on a computer, the computer is enabled to perform the method in any one of the first aspect, the second aspect, the third aspect, and the fourth aspect, and the possible implementations.

### BRIEF DESCRIPTION OF DRAWINGS

FIG. 1 is a schematic diagram of a communication system applicable to an embodiment of this application;
FIG. 2 is a schematic block diagram applicable to an embodiment of this application;
FIG. 3 is a schematic interaction diagram of a communication method applicable to an embodiment of this application;
FIG. 4 is another schematic interaction diagram of a communication method applicable to an embodiment of this application;
FIG. 5 is still another schematic interaction diagram of a communication method applicable to an embodiment of this application;
FIG. 6 is yet another schematic interaction diagram of a communication method applicable to an embodiment of this application;
FIG. 7 is a schematic block diagram of a communication apparatus applicable to an embodiment of this application; and
FIG. 8 is a schematic diagram of an architecture of a communication apparatus applicable to an embodiment of this application.

### DESCRIPTION OF EMBODIMENTS

The following describes technical solutions of this application with reference to the accompanying drawings.

A wireless communication system mentioned in embodiments of this application includes but is not limited to: a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a 5th generation (5th Generation, 5G) system, a new radio (New Radio, NR) system, or a future evolved communication system.

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

Embodiments of this application provide a communication method and apparatus, so that when a user is in a non-connected state or discontinuously reports a measurement result, a quality of experience measurement result can be associated with a wireless network quality monitoring result. In this way, a configuration of a RAN can be targetedly optimized, and user experience is improved.

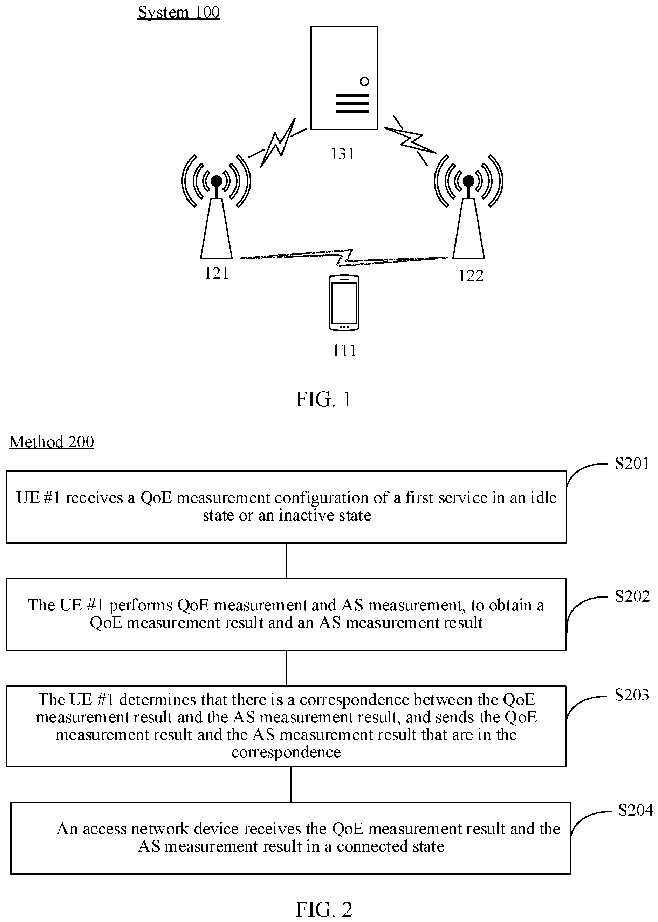

For ease of understanding embodiments of this application, a network communication system applicable to an embodiment of this application is first described in detail with reference to FIG. 1.

FIG. 1 is a schematic diagram of a communication system 100 applicable to an embodiment of this application. As shown in FIG. 1, the communication system 100 includes at least one terminal device, for example, a terminal device 111 shown in FIG. 1. The communication system 100 may further include at least one access network device, for example, an access network device 121 and an access network device 122 shown in FIG. 1. The communication system 100 further includes a core network device, for example, a core network device 131 shown in FIG. 1. The core network device and the access network device may be connected in a wired or wireless manner.

When the terminal device communicates with the access network device, the access network device may manage one or more cells. The terminal device may access the access network device in at least one of the one or more cells, and communicate with the access network device in the cell accessed by the terminal device.

It should be noted that a cell may be understood as an area within coverage of radio signals of the access network device.

The terminal device and the access network device may perform a radio resource control (Radio Resource Control, RRC) setup process. After an RRC connection is established, an RRC state of the terminal device is an RRC connected (RRC_CONNECTED) state. The terminal device and the access network device may implement uplink and downlink signaling transmission, to implement communication.

In the RRC_CONNECTED state, the access network device may enable, through an RRC release process, for example, by sending an RRC release (RRC Release) message to the UE, a state of UE to be switched from the RRC _CONNECTED state to an RRC idle (RRC_IDLE) state or an RRC inactive (RRC_INACTIVE) state.

In the RRC_IDLE state, there is no RRC connection between the terminal device and the access network device, and the terminal device may receive a paging message, a synchronization signal, a broadcast message, system information, and/or the like from the access network device. In this case, the terminal device cannot perform unicast data transmission with the access network device. The terminal device may enable, through an RRC setup process, the state of the terminal device to be switched from the RRC_IDLE state to the RRC_CONNECTED state. In the RRC_INACTIVE state, there is no RRC connection between the terminal device and the access network device, but a serving base station of the terminal device still maintains a context of the terminal device and still maintains an interface between a core network and the serving base station of the terminal device. The terminal device may receive a paging message, a synchronization signal, a broadcast message, system information, and/or the like from the access network device. In this case, the terminal device cannot perform unicast data transmission with the access network device. The terminal device may enable, through an RRC setup or RRC resume (resume) process, the state of the terminal device to be switched from the RRC_INACTIVE state to the RRC_CONNECTED state.

In embodiments of this application, the terminal device may include various access terminals, mobile devices, user terminals, or user apparatuses that have a wireless communication function, for example, user equipment (user equipment, UE), a handheld terminal, a notebook computer, a subscriber unit (subscriber unit), a cellular phone (cellular phone), a smartphone (smartphone), a wireless data card, a personal digital assistant (personal digital assistant, PDA) computer, a tablet computer, a wireless modem (modem), a handheld (handheld) device, a laptop computer (laptop computer), a cordless phone (cordless phone), a wireless local loop (wireless local loop, WLL) station, a machine type communication (machine type communication, MTC) terminal, or another device that can access a network.

By way of example, and not limitation, in embodiments of this application, the terminal device may alternatively be a wearable device. The wearable device may also be referred to as a wearable intelligent device, and is a general term for wearable devices such as glasses, gloves, a watch, clothes, and shoes that are developed by applying wearable technologies in intelligent designs of daily wear. The wearable device is a portable device that can be directly worn on a body or integrated into clothes or an accessory of a user. The wearable device is not merely a hardware device, but implements a powerful function through software support, data exchange, and cloud interaction. Generalized wearable intelligent devices include full-featured and large-size devices that can implement complete or partial functions without depending on smartphones, such as smart watches or smart glasses, and devices that focus on only one type of application function and need to work with another device such as a smartphone, such as various smart bands or smart accessories for monitoring physical signs.

In addition, in embodiments of this application, the terminal device may alternatively be a terminal device in an internet of things (internet of things, IoT) system. IoT is an important part of future development of information technologies. A main technical feature of the IoT is connecting a thing to a network by using a communication technology, to implement an intelligent network for human-machine interconnection and thing-thing interconnection. The terminal device and the access network device communicate with each other by using an air interface technology. An application scenario is not limited in embodiments of this application.

In embodiments of this application, the access network device includes but is not limited to: a next generation NodeB (next generation NodeB, gNB) evolved NodeB (evolved NodeB, eNB), a radio network controller (Radio Network Controller, RNC), a NodeB (NodeB, NB), a base station controller (Base Station Controller, BSC), a base transceiver station (Base Transceiver Station, BTS), a home base station (for example, a Home evolved NodeB or a Home NodeB (HNB)), a baseband unit (Baseband Unit, BBU), and an access point (Access Point, AP), a wireless relay node, a wireless backhaul node, a transmission point (transmission point, TP), a transmission reception point (transmission reception point, TRP), or the like in a wireless fidelity (Wireless Fidelity, Wi-Fi) system, or may be a gNB or a transmission point (TRP or TP) in a 5G system such as an NR system, or one antenna panel or a group of antenna panels (including a plurality of antenna panels) of a base station in a 5G system, or may be a network node, for example, a baseband unit (BBU) or a distributed unit (distributed unit, DU), constituting a gNB or a transmission point.

In embodiments of this application, the core network device is a device in a core network (core network, CN) that provides service support for the terminal. Currently, some examples of the core network device are as follows: an access and mobility management function (access and mobility management function, AMF) entity, a session management function (session management function, SMF) entity, and a user plane function (user plane function, UPF) entity, which are not listed one by one herein. The AMF entity may be responsible for access management and mobility management of the terminal. The SMF entity may be responsible for session management, for example, user session setup. The UPF entity may be a user plane functional entity, and is mainly responsible for a connection to an external network. It should be noted that an entity in this application may also be referred to as a network element or a functional entity. For example, the AMF entity may also be referred to as an AMF network element or an AMF functional entity. For another example, the SMF entity may also be referred to as an SMF network element or an SMF functional entity.

When UE is the idle state or inactive state, the UE needs to perform QoE measurement in some services. For example, this type of services is a multimedia broadcast multicast service (Multimedia Broadcast Multicast Service, MBMS) or a multicast broadcast service (Multicast Broadcast service, MBS).

In the following embodiments, for differentiation and without loss of generality, UE # 1 is an example of the terminal device, and a service #A is an example of a service type. The access network device receives a measurement task from a CN, an OAM, or an EM, where the measurement task sent by the CN is for specified UE, but the measurement task sent by the OAM or the EM is not for the specified UE; and the access network device needs to select specified UE under the access network device according to a specific policy, to perform measurement collection. A measurement collection entity (Measurement collection entity, MCE) is configured to collect a final measurement result. The measurement collection entity may alternatively be replaced with a trace collection entity (Trace collection entity, TCE) or another entity. It should be noted that this embodiment is merely an example and should not constitute any limitation on this application.

The UE #1 includes an access stratum (Access Stratum) and an upper layer of the access stratum. The access stratum of the UE #1 sends a QoE measurement configuration to the upper layer of the access stratum of the UE #1, the upper layer of the access stratum of the UE #1 performs QoE measurement based on the measurement configuration, the access stratum of the UE #1 performs AS measurement, the upper layer of the access stratum of the UE #1 sends a QoE measurement result to the access stratum of the UE #1, and the access stratum of the UE #1 further reports the QoE measurement result. The QoE measurement result may indicate a user experience status in a current service, and this AS measurement result may indicate a wireless coverage status and performance of the access stratum in this wireless network. The upper layer of the access stratum of the UE #1 may be an application layer, or may be a layer configured to perform QoE measurement. The access stratum of the UE #1 may be an RRC layer or another layer that performs AS measurement (for example, a packet data convergence protocol (Packet Data Convergence Protocol, PDCP) layer, a radio link control (Radio Link Control, RLC) layer, a media access control (Media Access Control, MAC) layer, or a physical layer (Physical Layer, PHY)), or may be a layer configured to perform AS measurement. The QoE measurement may also be referred to as application layer measurement.

In this embodiment, due to mobility of the user equipment, an access network device that sends a measurement configuration (including a QoE measurement configuration and/or an AS measurement configuration) and an access network device that receives a measurement result (including a QoE measurement result and/or an AS measurement result) may be a same access network device, or may be different access network devices.

The QoE measurement in embodiments of this application is classified into signaling-based QoE measurement and management-based QoE measurement. For the signaling-based QoE measurement, the access network device obtains configuration information #1 from the CN, where the configuration information #1 is a QoE measurement configuration, also referred to as an application layer measurement configuration. The configuration information #1 is for specified UE. For example, the configuration information #1 is sent through an interface between the access network device and the CN for the UE #1. The access network device performs QoE measurement for the specified UE based on the configuration information #1. For the management-based QoE measurement, the access network device obtains configuration information #1 from the OAM or the EM, where the OAM or the EM notifies the access network device to perform QoE measurement not for specific UE, and the access network device needs to select specified UE under the access network device according to a specific policy, to perform QoE measurement.

In addition to the configuration information #1, the access network device may further obtain, from the CN, the OAM, or the EM, an application layer indicator reported by the UE. An upper-layer indicator of the access stratum is an indicator that is measured by the UE and that can be interpreted, seen, or perceived by the access network device. The application layer indicator is, for example, an average throughput, an initial playback latency, a buffer level, a playback latency, deterioration duration, or jitter duration. This is not limited in this embodiment of this application.

FIG. 2 is a schematic block diagram of a communication method applicable to an embodiment of this application. The method 200 may include the following steps.

S201: UE #1 receives a QoE measurement configuration of a service #Ain an idle state or an inactive state.

For example, the UE #1 receives the QoE measurement configuration sent by an access network device. An OAM or an EM sends QoE measurement configuration information to the access network device, and the access network device may determine, based on the QoE measurement configuration information, that the UE #1 performs the QoE measurement configuration of the service #Ain the idle state or the inactive state, and notify the UE #1 by using a broadcast message or a dedicated RRC message. The QoE measurement configuration information sent by the OAM or the EM includes the QoE measurement configuration. Optionally, the QoE measurement configuration information may further include an address and a task identifier that are of a measurement collection entity, where the task identifier may be a trace reference (trace reference) identifier or a QoE reference (QoE reference) identifier. The trace reference identifier and the QoE reference identifier are used to describe a QoE measurement collection task, are globally unique identifiers, and may include a mobile country code (mobile country code, MCC), a mobile network code (mobile network code, MNC), a trace identifier, or a QoE measurement collection identifier, where the trace identifier or the QoE measurement collection identifier is allocated by a management system or an operator, and is, for example, a 3-byte character string.

Specific content of the QoE measurement configuration information is the same as that in a current technology, and the OAM or the EM notifies the access network device of the QoE measurement configuration information. In addition, the QoE measurement configuration information further includes indication information, where the indication information indicates, based on the QoE measurement configuration in the measurement configuration information, the terminal device to measure a specified application layer indicator, for example, an average throughput, a playback latency, or a buffer level. The access network device can notify, based on the indication information, the terminal device to report measurement values corresponding to the application layer indicators that can be interpreted, seen, or perceived by the access network device.

For example, the QoE measurement configuration information may alternatively include another indication information. For example, the indication information indicates whether QoE measurement is performed on the service #A in the idle state or the inactive state, whether QoE measurement is performed on the service #A in a connected state, or whether QoE measurement is performed in all the foregoing states. Therefore, the access network device selects, based on the indication information, to notify the UE #1 to perform QoE measurement. For example, when sending the QoE measurement configuration to the UE #1, the access network device specifies, based on the indication information, whether the UE #1 in the connected state performs QoE measurement on the service #A in the idle state or the inactive state, or performs QoE measurement on the service #A, or performs QoE measurement in all the foregoing states.

For example, the QoE measurement configuration information may alternatively include AS measurement result storage indication information, for indicating a manner and content of recording an AS measurement result.

Specifically, the AS measurement result storage indication information indicates whether the AS measurement result needs to be carried or recorded during QoE measurement; or indicates a storage or recording periodicity of the AS measurement result; or indicates a storage or recording condition of the AS measurement result. For example, only when the AS measurement result is lower than a threshold, the UE #1 stores or records the AS measurement result.

For example, the QoE measurement configuration may alternatively be a measurement configuration that is of the service #A in the idle state or the inactive state and that is generated by the access network device based on a requirement of the access network device.

S202: The UE #1 performs QoE measurement and AS measurement, to obtain a QoE measurement result and an AS measurement result.

For example, when the UE #1 receives the QoE measurement configuration and starting receiving of the service #A, the UE #1 starts the QoE measurement, and an upper layer of an access stratum of the UE #1 generates session start indication information of the service, and sends the session start indication information to the access stratum of the UE #1. After receiving the session start indication information, the access stratum may start the AS measurement. The session start indication information indicates that QoE measurement corresponding to a session has been started. Specifically, the session start indication information may include a record session indication. The record session indication may be a 2-byte character string, and the upper layer of the access stratum of the UE #1 generates the indication. A same indication is used in an entire process of a session, and different sessions correspond to different record session indications. In other words, the upper layer of the AS of the UE allocates different record session indications to different sessions.

For example, the UE #1 may include a time identifier when sending the QoE measurement result, and may include a time identifier when storing the result during AS measurement.

For example, when reporting the QoE measurement result, the UE #1 may optionally report the measurement result based on a reporting periodicity sent by the access network device or report the measurement result one by one based on a reporting sequence.

S203: The UE #1 determines that there is a correspondence between the QoE measurement result and the AS measurement result, and sends the QoE measurement result and the AS measurement result that are in the correspondence.

For example, the UE #1 may determine, based on the time identifiers of the measurement results, that there is the correspondence between the QoE measurement result and the AS measurement result.

For example, the UE #1 may determine, based on the periodicity information, time information corresponding to the QoE measurement result, to determine the corresponding AS measurement result.

For example, the UE #1 may alternatively associate the AS measurement result one by one based on the reporting sequence of the QoE measurement result. For example, after receiving two QoE measurement results, the UE #1 associates the 1^{st} QoE measurement result with an AS measurement result generated between the two measurement results.

For example, the UE #1 may alternatively send indication information to the access network device, to indicate that there is a correspondence between the two sent measurement results.

S204: The access network device receives the QoE measurement result and the AS measurement result.

For example, the access network device may alternatively determine, based on the time identifiers, that there is the correspondence between the QoE measurement result and the AS measurement result.

For example, the access network device may alternatively send the time identifiers and the measurement results to the measurement collection entity, and the measurement collection entity further performs association.

According to the solution provided in this embodiment of this application, the user equipment performs QoE measurement and AS measurement on the service in the idle state or the active state, and the user equipment determines, based on the time identifiers or a measurement rule, that there is the correspondence between the QoE measurement result and the AS measurement result, and sends the QoE measurement result and the AS measurement result that are in the correspondence to the network device, so that a configuration of a RAN can be targetedly optimized, and user experience is improved.

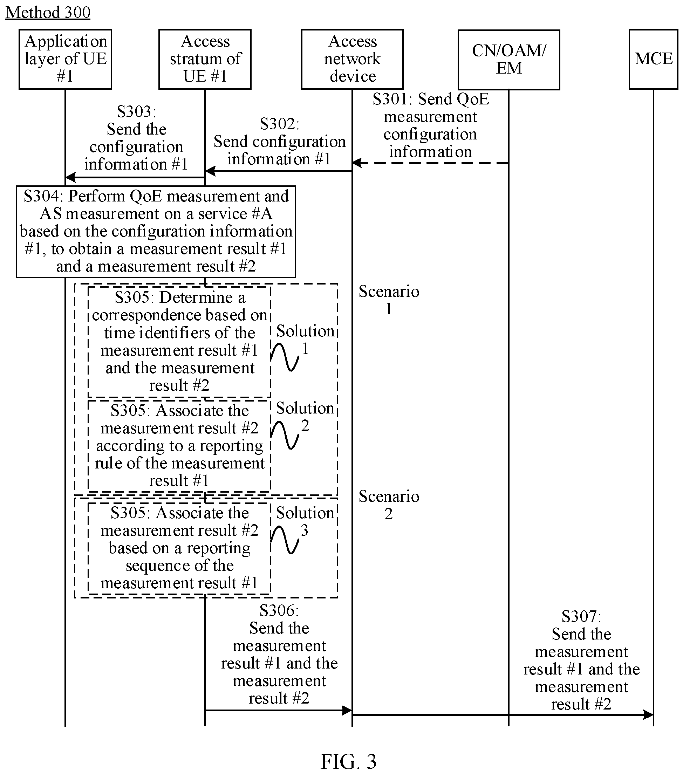

FIG. 3 is a schematic interaction diagram of a communication method applicable to an embodiment of this application. The method 300 may include the following steps.

S301: A CN, an OAM, or an EM sends QoE measurement configuration information to an access network device.

Specific content included in the QoE measurement configuration information is basically the same as that of QoE measurement configuration information in a current technology. The QoE measurement configuration information includes a QoE measurement configuration, referred to as an application layer measurement configuration, and may further include other content, for example, a selection area range of the application layer measurement configuration and a service type corresponding to the application layer measurement configuration. This is not limited in this embodiment of this application. The application layer measurement configuration may be included in the QoE measurement configuration information in a form of a container, or may be included in the QoE measurement configuration information not in a form of a container. Optionally, the QoE measurement configuration information may further include an address and a task identifier that are of a measurement collection entity, where the task identifier is the same as that in step S201. Details are not described herein again.

In a possible implementation, indication information #1 may be further sent, where the indication information #1 indicates to perform QoE measurement on a service #A in an RRC_IDLE state or an RRC INACTIVE state.

In a possible implementation, AS measurement result storage indication information may be further sent, where the AS measurement result storage indication information indicates a manner and content of recording an AS measurement result. For example, the AS measurement result storage indication information may belong to the QoE measurement configuration information; or may not belong to the content in the QoE measurement configuration information, for example, may belong to configuration information corresponding to logged MDT.

Specifically, the AS measurement result storage indication information includes at least one of the following: information indicating whether the AS measurement result needs to be carried, recorded, or measured during QoE measurement; or a storage, recording, or measurement periodicity of the AS measurement result; or a storage or recording condition of the AS measurement result. For example, only when the AS measurement result is lower than a threshold, UE #1 stores or records the AS measurement result.

The access network device may alternatively have a function of determining QoE measurement configuration information for the UE #1. In this case, step S301 is an optional step.

S302: The access network device sends configuration information #1 to the UE #1.

The configuration information #1 is the QoE measurement configuration. The OAM or the EM sends the QoE measurement configuration information to the access network device. The access network device may determine, based on the QoE measurement configuration information, the configuration information #1 for performing the service #A by the UE #1 in an idle state or an inactive state. The QoE measurement configuration information sent by the OAM or the EM includes the configuration information #1.

For signaling-based QoE measurement, the access network device determines that the UE #1 supports the QoE measurement, and directly sends the configuration information #1 to the UE #1 specified by the CN. For management-based QoE measurement, the access network device selects accessed UE #1 according to a specific policy, determines that the UE #1 supports the QoE measurement, and then sends the configuration information #1 to the UE #1. For example, the policy is that the QoE measurement configuration information sent by the OAM to the access network carries the selection area range of the application layer measurement configuration, and the access network device selects only UE within the area range for the QoE measurement.

The access network device further sends a service type service #A corresponding to the configuration information #1.

In a possible implementation, the access network device may send the configuration information #1 to the UE #1 by using a broadcast message or a dedicated RRC message.

For example, the dedicated RRC message is an RRC release message or an RRC reconfiguration message.

In a possible implementation, the access network device may further send indication information #1, where the indication information #1 indicates the UE #1 to perform QoE measurement in the RRC_IDLE state or the RRC_INACTIVE state.

In a possible implementation, the access network device may further send AS measurement result storage indication information, where the AS measurement result storage indication information indicates to the UE #1 a manner and content of recording an AS measurement result. For specific content of the AS measurement result storage indication information, refer to the foregoing descriptions.

In a possible implementation, the access network device may further send duration #1, and the UE #1 performs QoE measurement within the duration #1.

Optionally, the duration #1 is a time period determined by the access network device, and the QoE measurement is completed within the time period, so that power consumption of the UE #1 can be controlled. A determining basis may be information about the service type service #A corresponding to the UE #1, a load status of the access network device, or the like. This is not limited in this embodiment of this application.

S303: An access stratum of the UE #1 sends the configuration information #1 to an upper layer of the access stratum of the UE #1.

In this embodiment of this application, the access stratum of the UE #1 may be an RRC layer of the UE #1, another layer (for example, a PDCP layer, an RLC layer, a MAC layer, or a PHY layer) that performs AS measurement, or an AS measurement dedicated layer. The upper layer of the access stratum of the UE #1 may be an application layer, or may be a configured QoS measurement dedicated layer.

S304: The UE #1 performs QoE measurement and AS measurement on the service #A, to obtain a measurement result #1 and a measurement result #2.

The measurement result #1 (as an example of a first measurement result) includes an application layer measurement result obtained by the UE #1 in a first time period, and the measurement result #2 (as an example of a second measurement result) includes an access stratum measurement result obtained by the UE #1 in a second time period. The first time period overlaps the second time period. The overlapping means that the first time period and the second time period have an overlapping range, and do not necessarily and completely correspond to each other.

After starting to perform the service #A, the upper layer of the access stratum of the UE #1 performs QoE measurement on the service #A. It should be noted that not only QoE measurement performed by an application layer of the UE #1 needs to be started, but also AS measurement performed by the access stratum of the UE #1 needs to be started. The measurement result #1 is obtained at the upper layer of the access stratum of the UE #1, and the measurement result #2 is obtained at the access stratum of the UE #1. The measurement result #1 includes a QoE measurement result, and the measurement result #2 includes an AS measurement result.

After starting receiving of the service #A, the upper layer of the access stratum of the UE #1 starts the QoE measurement. A manner of starting (triggering) the QoE measurement is as follows.

In a possible implementation, when the access network device sends the configuration information #1 by using the dedicated RRC message, the UE #1 starts to perform QoE measurement after entering the RRC_IDLE state or the RRC _INACTIVE state and starting to start the receiving of the service #A.

Further, after starting the QoE measurement, the upper layer of the access stratum of the UE #1 may further determine to stop the QoE measurement. A manner of stopping the QoE measurement is as follows. In a possible implementation, the access network device sends duration #1. After receiving the duration #1 and entering the RRC_IDLE or RRC_INACTIVE state, the UE #1 starts a timer, where duration of the timer is duration of the duration #1. In a possible implementation, the access network device sends duration #1. After the UE #1 receives the duration #1 and enters the RRC_IDLE or RRC_INACTIVE state, and the UE starts to start the receiving of the service #A, the UE #1 starts a timer, where duration of the timer is duration of the duration #1. When time of the timer ends, the upper layer of the access stratum of the UE #1 stops the QoE measurement.

The timer may be started at the upper layer of the access stratum of the UE #1, or may be started at the access stratum of the UE #1. If the timer is started at the upper layer of the access stratum of the UE #1, the access stratum of the UE #1 needs to first send the duration #1 to the upper layer of the access stratum of the UE #1. If the timer is started at the access stratum of the UE #1, the access stratum of the UE #1 needs to send stop indication information to the upper layer of the access stratum.

After the upper layer of the access stratum of the UE #1 starts the QoE measurement, a manner of triggering the access stratum of the UE #1 to perform AS measurement is as follows:
When starting the QoE measurement, the upper layer of the access stratum of the UE #1 sends indication information #2 (an example of first indication information) to the access stratum of the UE #1.

The indication information #2 is session start indication information of the service #A, and may indicate that the upper layer of the access stratum of the UE #1 has started the QoE measurement performed on the service #A.

That the upper layer of the access stratum of the UE #1 has started the QoE measurement performed on the service #A means that the UE #1 has started the QoE measurement when starting to perform the service #A, in other words, receiving the session start indication information.

The indication information #2 includes information corresponding to the QoE measurement performed on the service #A. The information corresponding to the QoE measurement includes one of the following: a service type (where the service type herein is a streaming service, an MTSI, a VR service, or the like) corresponding to the QoE measurement that has been started by UE #1, and slices in the service type that have started QoE measurement (for example, carrying an S-NSSAI), a record session indication, and the like. The record session indication may be a character string. In addition, the upper layer of the access stratum of the UE #1 generates different record session indications for different sessions. That is, different sessions correspond to different record session indications.

When receiving the AS measurement result storage indication information, the access stratum of the UE #1 starts the AS measurement and stores the measurement result #2.

Optionally, the measurement result #2 includes the information corresponding to the QoE measurement.

In a possible implementation, the access stratum of the UE #1 starts the AS measurement and stores an AS measurement result, and the access stratum of the UE #1 performs measurement, storage, or recording based on the AS measurement result storage indication information.

Specifically, for example, the AS measurement result storage indication information includes a storage, recording, or measurement periodicity, signal quality (for example, RSRP/RSRQ) of a serving cell and a neighboring cell measured by the UE #1 in cell selection/reselection may be periodically stored based on the storage, recording, or measurement periodicity in the AS measurement result storage indication information, and the information corresponding to the QoE measurement is added to a storage record generated in each periodicity. For another example, the AS measurement result storage indication information includes a storage condition, and whether to store the measurement result #2 of the UE #1 may be determined based on the storage condition. To be specific, when the AS measurement result meets a specified condition, the access stratum of the UE #1 stores the measurement result, and adds the information corresponding to the QoE measurement to each generated storage record.

In a possible implementation, when storing the measurement result #2, the access stratum of the UE #1 may further store a time identifier #2. The time identifier #2 is time information for storing the measurement result #2, and the time identifier #2 may indicate a second time period corresponding to the measurement result #2.

The time information may be represented by absolute time (to be specific, in a form of a year, a month, a day, an hour, a minute, a second, and a millisecond) or relative time (a time offset from a moment at which the QoE measurement starts (in other words, a moment at which the start indication information is sent described above) or a moment at which the application layer measurement configuration is received to a moment at which the AS measurement result is stored).

In a possible implementation, the measurement result #2 may further include IDC information.

Specifically, when recording the AS measurement result, if detecting an in-device coexistence (In-Device Coexistence, IDC) problem, the UE adds the IDC information to the AS measurement result.

The IDC information includes at least one of the following: whether the terminal device detects IDC, frequencies corresponding to cells in which the terminal device detects the IDC, start time and end time at which the IDC is detected, and duration during which the IDC is detected.

The IDC problem is an interference problem detected by the terminal device or a network side device in some subframes/timeslots during wireless communication. For frequencies corresponding to active serving cells in the RRC _CONNECTED state or serving cells in the RRC_IDLE/RRC_INACTIVE state, the IDC problems are these interference problems cannot be autonomously resolved by the terminal device. For frequencies corresponding to inactive serving cells in the RRC_CONNECTED state, the IDC problem means that it is expected that when the serving cells are activated, the terminal device detects the interference problems and cannot autonomously resolve the interference problems. For frequencies corresponding to non-serving cells, the IDC problem means that when the frequencies corresponding to the non-serving cells change to frequencies corresponding to serving cells, the terminal device detects the interference problems and cannot autonomously resolve the interference problems. These IDC problems may affect communication performance of the terminal device. When collecting QoE measurement results, if a network device cannot know whether the terminal device detects the IDC problem when obtaining the measurement results, an incorrect conclusion may be obtained when the QoE measurement results are analyzed. For example, the IDC interference affects accuracy of the QoE measurement results. If the IDC interference is detected, it is detected in the QoE measurement results that radio signal quality of a cell in a base station may be degraded. In this way, actual radio performance cannot be reflected.

After stopping the QoE measurement, the upper layer of the access stratum of the UE #1 indicates the access stratum of the UE #1 to stop the QoE measurement.

Specifically, when the upper layer of the access stratum of the UE #1 stops the QoE measurement, the UE #1 sends indication information #3 to the access stratum of the UE #1. The indication information #3 indicates that the UE #1 has stopped the QoE measurement. The indication information #3 includes the information corresponding to the QoE measurement. After receiving the indication information #3, the access stratum of the UE #1 stops the measurement or stores a measurement result #2.

S306: The UE #1 reports the measurement result #1 and the measurement result #2 to the access network device in the RRC_CONNECTED state.

There are two cases in which the UE #1 reports the measurement result #1 and the measurement result #2 to the access network device in the RRC_CONNECTED state.

Case 1: The UE #1 determines that there is a correspondence between the measurement result #1 and the measurement result #2, and sends the measurement result #1 and the measurement result #2 that are in the correspondence.

In this case, the UE #1 may further send information #1 (as an example of the first information), and the information #1 indicates that there is the correspondence between the measurement result #1 and the measurement result #2.

Specifically, before reporting the measurement result #1 and the measurement result #2 to the access network device in the RRC _CONNECTED state, the UE #1 may associate the measurement result #1 with the measurement result #2, that is, perform step S305. The association means determining that there is a correspondence between the QoE measurement result and the AS measurement result, and the correspondence may alternatively be an association relationship. Optionally, when the AS measurement result includes a measurement result of a service (for example, a transmission latency or a false positive rate of the service), the association means determining that there is a correspondence between a QoE measurement result and an AS measurement result that are performed for the same service.

Further, the access network device may send the measurement result #1 and the measurement result #2 that are in the correspondence to the measurement collection entity, and the measurement collection entity determines a correlation between the measurement result #1 and the measurement result #2 based on the correspondence, so that whether poor user experience is caused by a wireless network fault can be determined, and a configuration of a RAN can be targetedly optimized.

The upper layer of the access stratum of the UE #1 performs QoS measurement in the RRC_IDLE/RRC_INACTIVE state to obtain a measurement result #1. There are two scenarios based on a position at which the measurement result #1 is stored.

### Scenario 1:

The measurement result #1 is stored at the upper layer of the access stratum of the UE #1.

In this scenario, after entering the RRC_CONNECTED state, the UE #1 needs to first notify the upper layer of the access stratum of the UE #1 that the UE #1 has entered the RRC _CONNECTED state. The upper layer of the access stratum of the UE #1 may be notified by using the following two methods.

Method 1: After the UE #1 enters the RRC _CONNECTED state, the access stratum of the UE #1 sends indication information #4 to the upper layer of the access stratum of the UE #1, to indicate that the UE #1 has entered the RRC _CONNECTED state or the upper layer of the access stratum of the UE #1 may send the measurement result #1.

In a possible implementation, after receiving the indication information #4, the upper layer of the access stratum of the UE #1 may first indicate to the access stratum of the UE #1 whether there is the measurement result #1. The access stratum of the UE #1 indicates to the access network device whether there is the measurement result #1. The access network device may configure a radio signaling bearer for the UE #1, to transmit the measurement result #1. The access stratum of the UE #1 may indicate to the upper layer of the access stratum of the UE #1 that the measurement result #1 may be sent.

Method 2: After the UE #1 enters the RRC _CONNECTED state, the access stratum of the UE #1 sends indication information #5 to the access network device, to indicate that the QoE measurement configuration is performed. The access network device configures a radio signaling bearer for the UE #1, to transmit the measurement result #1. The access stratum of the UE #1 may indicate to the upper layer of the access stratum of the UE #1 that the measurement result #1 may be sent.

In this scenario, there may be the following two solutions in which the access stratum of the UE #1 associates the measurement result #1 with the measurement result #2.

### Solution 1:

The upper layer of the access stratum of the UE #1 performs QoE measurement in the RRC_IDLE/RRC_INACTIVE state and stores the measurement result #1. After entering the RRC _CONNECTED state, the upper layer of the access stratum of the UE #1 sends the measurement result #1 to the access stratum of the UE #1, and sends a time identifier #1. The time identifier #1 indicates a first time period corresponding to the measurement result #1, namely, time between a start moment and an end moment that corresponds to the QoE measurement result.

The access stratum of the UE #1 determines, based on the time identifier #1 and the time identifier #2, the measurement result #2 corresponding to the measurement result #1.

Specifically, the access stratum of the UE #1 associates the measurement result #1 corresponding to the time period in which QoE measurement is performed with the measurement result #2 stored by the access stratum of the UE #1 within the time period. In other words, the access stratum of the UE #1 may query, based on the time period corresponding to the QoE measurement, an AS measurement result recorded within the time period, and determine that the AS measurement result recorded within the time period is associated with the QoE measurement result within the time period.

In a possible implementation, when sending the measurement result #1 to the access stratum of the UE #1, the upper layer of the access stratum of the UE #1 may further send the information corresponding to the QoE measurement.

In a possible implementation, in the QoE measurement performed on the service #A, QoE measurement may be separately performed on a plurality of sessions, and different sessions need to be distinguished from each other. Therefore, the correspondence needs to be determined with reference to information corresponding to QoE measurement to perform association.

Specifically, the time period included in the time identifier #1 may be indicated in the following manners.

Manner 1: A time period between the start moment and the end moment is recorded by using relative time. For example, the start moment of the first time period corresponding to the measurement result #1 is in a form of a time offset from a moment at which the measurement starts (in other words, a moment at which the upper layer of the access stratum of the UE #1 starts the QoS measurement or a moment at which service receiving is started) or the terminal device receives the application layer measurement configuration to the start moment of the first time period corresponding to the measurement result #1. The end moment of the first time period corresponding to the measurement result #1 is in a form of a time offset from the moment at which the measurement starts or the terminal device receives the application layer measurement configuration to the end moment of the first time period corresponding to the measurement result #1.

Optionally, in an implementation, in Manner 1, the upper layer of the access stratum of the UE #1 sends the indication information #2 to the access stratum of the UE #1 at the moment at which the application layer measurement starts (or referred to as the moment at which the service receiving is started). That is, the moment at which the indication information #2 is sent is the moment at which the application layer measurement starts. In another implementation, in Manner 1, the upper layer of the access stratum of the UE #1 does not immediately send the indication information #2 to the access stratum of the UE #1 at a moment at which application layer measurement starts (or referred to as a moment at which service receiving is started). That is, the moment at which the indication information #2 is sent is different from the moment at which the application layer measurement starts. In this case, when the start moment and the end moment are in the form of the time offset from the moment at which the measurement starts to the start moment of the first time period corresponding to the measurement result #1, and the upper layer of the access stratum of the UE #1 sends the indication information #2, time information needs to be carried. The time information is a moment at which the upper layer of the access stratum starts the QoE measurement, and may be in a form of the absolute time or the relative time, for example, the time offset from the moment at which the terminal device receives the application layer measurement configuration to the moment at which the QoE measurement starts.

Manner 2: The time period is recorded by using the absolute time. For example, specific time of the start moment and the end moment is recorded in a form of a year, a month, a day, a minute, and a second.

### Solution 2:

The access stratum of the UE #1 determines, according to a reporting rule of the measurement result #1, a measurement result #1 corresponding to the measurement result #2.

There may be the following two manners.
Manner 1: In step S302, the access network device may include a QoE measurement or reporting rule in the configuration information #1. The rule may include the following:
periodicity information, where, to be specific, the upper layer of the access stratum of the UE #1 periodically performs QoE measurement and reports the measurement result #1, and the access stratum determines, based on the periodicity information, a time period corresponding to the measurement result #1; or
the upper layer of the access stratum of the UE #1 reports the measurement result #1 after ending a current measurement session.

The access stratum of the UE #1 associates the measurement result #2 based on a rule indication and a reporting sequence of the measurement result #1.

For example, the periodicity information is five seconds. After the access stratum of the UE #1 receives the indication information #2, the access stratum may determine that a time period corresponding to each measurement result #1 is the five seconds, and associate the measurement result #1 with a measurement result #2 stored in each five second. That is, the access stratum of the UE #1 knows, based on the moment at which the application layer measurement starts (or referred to as the moment at which the service receiving is started) and the periodicity information, a time period corresponding to each subsequently received measurement result #1, so that the access stratum of the UE #1 can find a measurement result #2 within the time period corresponding to the measurement result #1. For example, if the UE #1 determines that the moment at which the application layer measurement starts (or referred to as the moment at which the service receiving is started) is a moment t1, a measurement result 2 is stored in t1+(n-1)*5 to t1+n*5 seconds corresponding to an n^{th} measurement result #1.

Optionally, in an implementation, in Manner 1, the upper layer of the access stratum of the UE #1 sends the indication information #2 to the access stratum of the UE #1 at the moment at which the application layer measurement starts (or referred to as the moment at which the service receiving is started). That is, the moment at which the indication information #2 is sent is the moment at which the application layer measurement starts. In another implementation, in Manner 1, the upper layer of the access stratum of the UE #1 does not immediately send the indication information #2 to the access stratum of the UE #1 at a moment at which application layer measurement starts (or referred to as a moment at which service receiving is started). That is, the moment at which the indication information #2 is sent is different from the moment at which the application layer measurement starts. In this case, when the start moment and the end moment are in the form of the time offset from the moment at which the measurement starts to the start moment of the first time period corresponding to the measurement result #1, and the upper layer of the access stratum of the UE #1 sends the indication information #2, time information needs to be carried. The time information is a moment at which the upper layer of the access stratum starts the QoE measurement, and may be in a form of the absolute time or the relative time, for example, the time offset from the moment at which the terminal device receives the application layer measurement configuration to the moment at which the QoE measurement starts.

In a possible implementation, in the QoE measurement performed on the service #A, QoE measurement may be separately performed on a plurality of sessions, and different sessions need to be distinguished from each other. Therefore, the correspondence needs to be determined with reference to information corresponding to QoE measurement.

Manner 2: Each time the upper layer of the access stratum of the UE #1 completes the measurement and generates a measurement result #1, the upper layer of the access stratum of the UE #1 may send the indication information #7 to the access stratum of the UE #1, to indicate that the measurement result #1 has been generated, and the access stratum of the UE #1 can know a measurement result #2 between two pieces of indication information #7. When the access stratum of the UE #1 subsequently receives a measurement result #1 from the upper layer of the access stratum, the access stratum may associate a measurement result 2 based on a sequence number of the measurement result #1, and associates the measurement result #2 generated between two pieces of received indication information #7 with the measurement result #1. For example, the access stratum of the UE #1 receives an n^{th} piece of indication information #7 at the moment t1, and receives an (n+1)^{th} piece of indication information #7 at the moment t2. Subsequently, if receiving an n^{th} measurement result #1 at a moment t3, the access stratum of the UE #1 knows that a measurement result #2 corresponding to the n^{th} measurement result #1 is a measurement result #2 recorded between receiving an (n-1)^{th} piece of indication information #7 and receiving the n^{th} piece of indication information #7. For the 1^{st} measurement result #1, a measurement result #2 corresponding to the 1^{st} measurement result #1 is a measurement result #2 recorded between receiving indication information #2 and receiving a 1^{st} piece of indication information #7.

### Scenario 2:

The measurement result #1 is stored at the access stratum of the UE #1.

### Solution 3:

The upper layer of the access stratum of the UE #1 performs QoS measurement in the RRC_IDLE/RRC_INACTIVE state and generates a measurement result #1, and sends the measurement result #1 to the access stratum of the UE #1 in the RRC_IDLE/RRC_INACTIVE state. The access stratum of the UE #1 may receive the measurement result #1 and may associate a measurement result #2.

For example, if receiving a QoS measurement result, the access stratum of the UE #1 may associate an AS measurement result generated between receiving a QoS measurement result last time or receiving indication information #2 and receiving the QoS measurement result this time with the measurement result received this time. For example, the access stratum of the UE #1 receives an (n-1)^{th} measurement result #1 at the moment t1, and receives an n^{th} measurement result #1 at the moment t2. In this case, the UE #1 uses a measurement result #2 recorded from the moment t1 to the moment t2 as a measurement result #2 corresponding to the n^{th} measurement result #1. For the 1^{st} measurement result #1, a measurement result #2 corresponding to the 1^{st} measurement result #1 is a measurement result #2 recorded between receiving indication information #2 and receiving the 1^{st} measurement result #1. For example, the access stratum of the UE #1 receives the indication information #2 at the moment t1, and receives the 1^{st} measurement result #1 at the moment t2. In this case, the UE #1 uses a measurement result #2 recorded from the moment t1 to the moment t2 as the measurement result #2 corresponding to the 1^{st} measurement result #1. In this solution, the upper layer of the access stratum of the UE #1 sends the indication information #2 to the access stratum of the UE #1 at a moment at which application layer measurement starts (or referred to as a moment at which service receiving is started). That is, the moment at which the indication information #2 is sent is the moment at which the application layer measurement starts.

Case 2: The UE #1 sends the measurement result #1 and the measurement result #2.

In this case, the UE #1 may further send a time identifier #1 (as an example of a second time identifier) and a time identifier #2 (as an example of the second time identifier), and the access network device determines, based on the time identifiers, that there is a correspondence between the measurement result #1 and the measurement result #2.

Specifically, the access stratum of the UE #1 may directly report the measurement result #1 and the measurement result #2, and report the time identifier #2 and the time identifier #1. The access network device associates the measurement result #1 with the measurement result #2 based on the time identifiers. It should be noted that, in this case, the access stratum of the UE #1 may separately report the measurement result #1 and the measurement result #2, or may be reported together, and a sequence is not limited.

S307: The access network device sends the measurement result #1 and the measurement result #2 to the measurement collection entity.

In a possible implementation, the measurement collection entity determines, based on the time identifier #1 and the time identifier #2, that there is a correspondence between the measurement result #1 and the measurement result #2.

According to the solution provided in this embodiment of this application, the user equipment performs QoE measurement and AS measurement on the service in the idle state or the inactive state, and the user equipment determines, based on the time identifier or a measurement rule, that there is the correspondence between the QoE measurement result and the AS measurement result, and sends the QoE measurement result and the AS measurement result that are in the correspondence to the network device, so that a configuration of a RAN can be targetedly optimized, and user experience is improved.

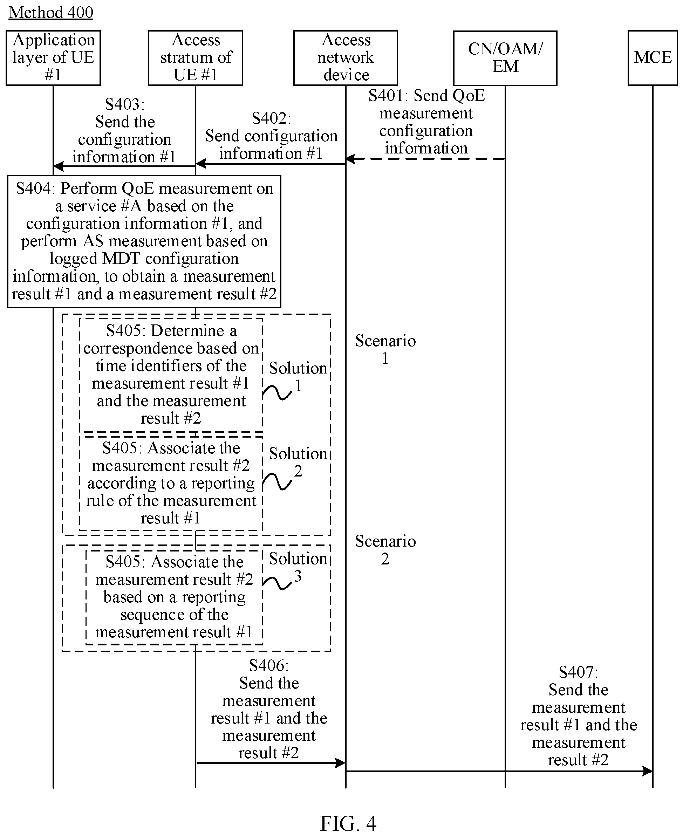

FIG. 4 is a schematic interaction diagram of a communication method applicable to an embodiment of this application. The method 400 may include the following steps.

S401: A CN, an OAM, or an EM sends QoE measurement configuration information to an access network device.

Specific content included in the QoE measurement configuration information is basically the same as that of QoE measurement configuration information in a current technology. For example, the QoE measurement configuration information includes a QoE measurement configuration, referred to as an application layer measurement configuration, and may further include other content, for example, a selection area range of the application layer measurement configuration and a service type corresponding to the application layer measurement configuration. This is not limited in this embodiment of this application. The application layer measurement configuration may be included in the QoE measurement configuration information in a form of a container, or may be included in the QoE measurement configuration information not in a form of a container. Optionally, the QoE measurement configuration information may further include an address and a task identifier that are of a measurement collection entity. For descriptions of the task identifier, refer to the descriptions in FIG. 2. The descriptions are the same as that in step S201, and details are not described herein again.

In a possible implementation, indication information #1 may be further sent, where the indication information #1 indicates to perform QoE measurement on a service #A in an RRC_IDLE state or an RRC INACTIVE state.

The access network device may alternatively have a function of determining QoE measurement configuration information for the UE #1. In this case, step S401 is an optional step.

S402: The access network device sends configuration information #1 to the UE #1.

The configuration information #1 is the QoE measurement configuration. The OAM or the EM sends the QoE measurement configuration information to the access network device. The access network device may determine, based on the QoE measurement configuration information, the configuration information #1 for performing the service #A by the UE #1 in an idle state or an inactive state. The QoE measurement configuration information sent by the OAM or the EM includes the configuration information #1.

For signaling-based QoE measurement, the access network device determines that the UE #1 supports the QoE measurement, and directly sends the configuration information #1 to the UE #1 specified by the CN. For management-based QoE measurement, the access network device selects accessed UE #1 according to a specific policy, determines that the UE #1 supports the QoE measurement, and then sends the configuration information #1 to the UE #1. For example, the policy is that the QoE measurement configuration information sent by the OAM to the access network carries the selection area range of the application layer measurement configuration, and the access network device selects only UE within the area range for the QoE measurement.

The access network device further sends a service type service #A corresponding to the configuration information #1.

In a possible implementation, the access network device may send the configuration information #1 to the UE #1 by using a broadcast message or a dedicated RRC message.

For example, the dedicated RRC message is an RRC release message or an RRC reconfiguration message.

In a possible implementation, the access network device may further send indication information #1, where the indication information #1 indicates the UE #1 to perform QoE measurement in the RRC_IDLE state or the RRC _INACTIVE state.

In a possible implementation, the access network device may further send duration #1, and the UE #1 performs QoE measurement within the duration #1.

It should be noted that the duration #1 is a time period determined by the access network device based on the information about the UE #1, and the QoE measurement is completed within the time period, so that power consumption of the UE #1 can be controlled.

S403: An access stratum of the UE #1 sends the configuration information #1 to an upper layer of the access stratum of the UE #1.

In this embodiment of this application, the access stratum of the UE #1 is an RRC layer of the UE #1, another layer, for example, a PDCP layer, an RLC layer, a MAC layer, or a PHY layer that performs AS measurement, or an AS measurement dedicated layer. The upper layer of the access stratum of the UE #1 may be an application layer, or may be a configured QoS measurement dedicated layer.

S404: The UE #1 performs QoE measurement on the service #A in the idle state or the inactive state, to obtain a measurement result #1.

The upper layer of the access stratum of the UE #1 performs QoE measurement according to the solution in this embodiment of this application. In this embodiment of this application, during the AS measurement, an AS measurement result is recorded according to an existing logged MDT mechanism.

Specifically, after starting to perform the service #A, the upper layer of the access stratum of the UE #1 performs QoE measurement on the service #A. It should be noted that not only QoE measurement performed by the upper layer of the access stratum of the UE #1 needs to be started, but also related information needs to be carried in logged MDT measurement performed by the access stratum of the UE #1. The measurement result #1 is obtained at the upper layer of the access stratum of the UE #1, and a measurement result #2 is obtained at the access stratum of the UE #1. The measurement result #1 includes a QoE measurement result, and the measurement result #2 includes an AS measurement result.

A manner in which the upper layer of the access stratum of the UE #1 starts (triggers) to start the QoE measurement is as follows. In a possible implementation, when the access network device sends the configuration information #1 by using the dedicated RRC message, the UE #1 starts to perform QoE measurement after entering the RRC_IDLE state or the RRC_INACTIVE state and starting the receiving of the service #A.

Further, after starting the QoE measurement, the upper layer of the access stratum of the UE #1 may further determine to stop the QoE measurement. A manner of stopping the QoE measurement is as follows. In a possible implementation, the access network device sends duration #1. After receiving the duration #1 and entering the RRC_IDLE or RRC_INACTIVE state, the UE #1 starts a timer, where duration of the timer is duration of the duration #1. In a possible implementation, the access network device sends duration #1. After the UE # receives the duration #1 and enters the RRC_IDLE or RRC_INACTIVE state, and the UE starts the receiving of the service #A, the UE #1 starts a timer, where duration of the timer is duration of the duration #1. When time of the timer ends, the upper layer of the access stratum of the UE #1 stops the QoE measurement.

The timer may be started at the upper layer of the access stratum of the UE #1, or may be started at the access stratum of the UE #1. If the timer is started at the upper layer of the access stratum of the UE #1, the access stratum of the UE #1 needs to first send the duration #1 to the upper layer of the access stratum of the UE #1. If the timer is started at the access stratum of the UE #1, the access stratum of the UE #1 needs to send start indication information and stop indication information. When the upper layer of the access stratum of the UE #1 starts the QoE measurement, the UE #1 sends indication information #2 (an example of first indication information) to the access stratum of the UE #1.

The indication information #2 indicates that the upper layer of the access stratum of the UE #1 has started the QoE measurement performed on the service #A.

That the upper layer of the access stratum of the UE #1 has started the QoE measurement performed on the service #A means that the QoE measurement is started when the service #A starts to be performed.

The indication information #2 includes information corresponding to the QoE measurement performed on the service #A. The information corresponding to the QoE measurement includes one of the following: a service type (where the service type herein is a streaming service, an MTSI, a VR service, or the like) corresponding to the QoE measurement that has been started by UE #1, and slices in the service type that have started QoE measurement (for example, carrying an S-NSSAI), a record session indication, and the like. The record session indication may be a character string. In addition, the upper layer of the access stratum of the UE #1 generates different record session indications for different sessions. That is, different sessions correspond to different record session indications.

When receiving the indication information #2, the access stratum of the UE #1 records the time identifier #2 in a logged MDT record in the logged MDT measurement, so that the access stratum of the UE #1 associates the QoE measurement result with the AS measurement result.

Optionally, the access stratum of the UE #1 starts and stores or records the AS measurement result according to the existing logged MDT mechanism.

Specifically, the access stratum of the UE #1 receives logged MDT configuration information from the access network device. For example, the logged MDT configuration information includes duration of one logged MDT. When the access stratum of the UE #1 receives the logged MDT configuration information, the access stratum of the UE #1 starts a timer #2, where duration of the timer #2 is the duration. When the timer #2 expires, the logged MDT measurement is stopped.

In a possible implementation, the logged MDT configuration information further includes a storage or recording periodicity. The access stratum of the UE #1 periodically performs storage based on the storage or recording periodicity. In other words, the UE #1 generates a measurement result in one periodicity, and stores the measurement result. The storage is specifically, for example, for signal quality of the UE #1 in a serving cell and a neighboring cell.

In a possible implementation, the logged MDT configuration information further includes a configuration of an event. The UE #1 starts the periodic storage only when the event is met. For example, the UE #1 starts the periodic storage only when signal quality of the UE #1 in a serving cell is lower than a specified threshold.

In a possible implementation, information corresponding to the QoE measurement is added to each generated storage record.

When storing the measurement result #2, the UE #1 further stores a time identifier #2 and information corresponding to the QoE measurement. The time identifier 2 is time information for storing the measurement result #2, and the time identifier #2 may indicate a time period corresponding to the measurement result #2.

The time information may be represented by absolute time (to be specific, in a form of a year, a month, a day, an hour, a minute, a second, and a millisecond) or relative time (a time offset from a moment at which the QoE measurement starts (in other words, a moment at which the start indication information is sent described above) or a moment at which the application layer measurement configuration is received to a moment at which the AS measurement result is stored).

After stopping the QoE measurement, the upper layer of the access stratum of the UE #1 indicates the access stratum of the UE #1 to stop the QoE measurement.

Specifically, when the upper layer of the access stratum of the UE #1 stops the QoE measurement, the UE #1 sends indication information #3' to the access stratum of the UE #1. The indication information #3' indicates that the RRC layer of the UE #1 stops the stopped QoE measurement. The indication information #3' includes the information corresponding to the QoE measurement. After receiving the indication information #3', the access stratum of the UE #1 stops recording the time identifier #2. S406: The UE #1 reports the measurement result #1 to the access network device in the RRC_CONNECTED state.

In a possible implementation, the UE #1 reports the measurement result #1 and the measurement result #2.

That the UE #1 reports the measurement result #1 and that the UE #1 reports a logged MDT measurement result (namely, the measurement result #2) according to the existing mechanism are two independent reporting processes. For example, the UE #1 sends indication information to the access network device, to indicate that the UE #1 has the logged MDT measurement result, and the access network device then sends indication information to the UE #1, to indicate to request the UE #1 to report the logged MDT measurement result. After receiving the indication information from the access network device, the UE #1 sends the logged MDT measurement result to the access network device.

In a possible implementation, the UE #1 includes the measurement result #2 when reporting the measurement result #1.

For a solution in which the UE #1 includes the measurement result #2 when reporting the measurement result #1, when sending the measurement result #1 to the access network device, the UE #1 may first associate the measurement result #1 with the measurement result #2, in other words, determine that there is a correspondence between the measurement result #1 and the measurement result #2. A specific association method is the same as that in step S305 in the embodiment. To avoid repetition, details are not described again.

It should be noted that, when the measurement result #1 is stored at the upper layer of the access stratum of the UE #1, after the UE#1 enters the RRC_CONNECTED state, the UE #1 needs to first notify the upper layer of the access stratum of the UE #1 that the UE #1 has entered the RRC _CONNECTED state. This notification mechanism is the same as that in step S305 in the embodiment. To avoid repetition, details are not described again.

S407: The access network device sends the measurement result #1 and the measurement result #2 to the measurement collection entity.

There are two cases in which the access network device sends the measurement result #1 to the measurement collection entity based on step S406.

Case 1: The access network device sends the measurement result #1 and the associated measurement result #2 to the measurement collection entity.

For case 1, specifically, there are three measures.

Measure 1: If the UE #1 includes the measurement result #2 when reporting the measurement result #1, the access network device directly sends the measurement result #1 and the associated measurement result #2 to the measurement collection entity.

Measure 2: If that the UE #1 reports the measurement result #1 and that the UE #1 reports the measurement result #2 are two independent processes, the UE #1 sends the measurement result #1 to the access network device, and also sends the time identifier #1, where the time identifier #1 indicates a time period corresponding to the measurement result #1. The UE #1 sends the measurement result #2 to the access network device, and also sends the time identifier #2, where the time identifier #2 indicates a time period corresponding to the measurement result #2. The access network device may determine, based on the time identifier #2 of the measurement result #2 and the time identifier #1 of the measurement result #1, that there is the correspondence between the measurement result #1 and the measurement result #2, and then sends the measurement result #1 and the associated measurement result #2 to the measurement collection entity. For example, the time identifier #1 may be in a form in Solution 1 in S305, and the time identifier #2 may be absolute time corresponding to a moment at which the access network device delivers logged MDT measurement in the existing logged MDT and a time offset of a moment at which the measurement result #2 is recorded relative to the absolute time. The access network device includes the absolute time in a logged MDT measurement configuration delivered to the UE #2, and the UE #2 also includes the absolute time when reporting the logged MDT measurement result (namely, the measurement result #2). For example, if the time identifier #1 corresponding to the measurement result #1 is a moment t2-t3, and the time identifier #2 corresponding to the measurement result #2 is a moment t3, the access network device determines, based on the time identifiers t2-t3 and t3, that there is the correspondence between the measurement result #1 and the measurement result #2.

Measure 3: If that the UE #1 reports the measurement result #1 and that the UE #1 reports the measurement result #2 are two independent processes, the UE #1 sends the measurement result #1 to the access network device. The UE #1 sends the measurement result #2 to the access network device, and also sends the time identifier #2, where the time identifier #2 indicates a time period corresponding to the measurement result #2. The access network device may determine, based on the time identifier #2 of the measurement result #2 and a QoE measurement or reporting rule, that there is the correspondence between the measurement result #1 and the measurement result #2, and then sends the measurement result #1 and the associated measurement result #2 to the measurement collection entity. Content of the QoE measurement or reporting rule is the same as that described in Solution 2 in S305.

For example, the access network device may know, according to a solution similar to that in S305 and based on a moment at which application layer measurement starts (or referred to as a moment at which service receiving is started) and periodicity information in the QoE measurement or reporting rule, a time period corresponding to each subsequently received measurement result #1, so that the access network device can find a measurement result #2 within the time period corresponding to the measurement result #1.

The time identifier #2 may be absolute time corresponding to a moment at which the access network device delivers logged MDT measurement in the existing logged MDT and a time offset of a moment at which the measurement result #2 is recorded relative to the absolute time. The access network device includes the absolute time in a logged MDT measurement configuration delivered to the UE #2, and the UE #2 also includes the absolute time when reporting the logged MDT measurement result (namely, the measurement result #2). For example, if the time identifier #1 corresponding to the measurement result #1 is a moment t2-t3, and the time identifier #2 corresponding to the measurement result #2 is a moment t3, the access network device determines, based on the time identifiers t2-t3 and t3, that there is the correspondence between the measurement result #1 and the measurement result #2.

Case 2: The access network device separately sends the measurement result #1 and the measurement result #2 to the measurement collection entity.

For case 2, specifically, there are two measures.

Measure 4: The UE #1 sends the measurement result #1 to the access network device, and also sends the time identifier #1, where the time identifier #1 indicates a time period corresponding to the measurement result #1. The access network device sends the measurement result #1 and the time identifier #1 to the measurement collection entity. Further, the measurement collection entity may determine, based on the time identifier #2 of the measurement result #2 and the time identifier #1 of the measurement result #1, that there is the correspondence between the measurement result #1 and the measurement result #2. For example, the time identifier #1 may be in a form in Solution 1 in S305, and the time identifier #2 may be absolute time corresponding to a moment at which the access network device delivers logged MDT measurement in the existing logged MDT and a time offset of a moment at which the measurement result #2 is recorded relative to the absolute time. The access network device includes the absolute time in a logged MDT measurement configuration delivered to the UE #1, and the UE #1 also includes the absolute time when reporting the logged MDT measurement result (namely, the measurement result #2). For example, if the time identifier #1 corresponding to the measurement result #1 is a moment t2-t3, and the time identifier #2 corresponding to the measurement result #2 is a moment t3, the measurement collection entity determines, based on the time identifiers t2-t3 and t3, that there is the correspondence between the measurement result #1 and the measurement result #2. Further, the correspondence is further determined with reference to the information corresponding to the QoE measurement included in the measurement result #2. For example, in QoE measurement in an MBS service type, QoE measurement may be separately performed on a plurality of sessions, and different sessions need to be distinguished from each other.

Measure 5: If that the UE #1 reports the measurement result #1 and that the UE #1 reports the measurement result #2 are two independent processes, the UE #1 sends the measurement result #1 to the access network device. The UE #1 sends the measurement result #2 to the access network device, and also sends the time identifier #2, where the time identifier #2 indicates a time period corresponding to the measurement result #2. The access network device sends the measurement result #1, the measurement result #2, and the time identifier #2 to the measurement collection entity. The measurement collection entity may determine, based on the time identifier #2 of the measurement result #2 and a QoE measurement or reporting rule, that there is the correspondence between the measurement result #1 and the measurement result #2. Content of the QoE measurement or reporting rule is the same as that described in Solution 2 in S305. The measurement collection entity may obtain the QoE measurement or reporting rule from the access network device, or the measurement collection entity may obtain the QoE measurement or reporting rule from the CN or the OAM.

For example, the measurement collection entity may know, according to a solution similar to that in S305 and based on a moment at which application layer measurement starts (or referred to as a moment at which service receiving is started) and periodicity information in the QoE measurement or reporting rule, a time period corresponding to each subsequently received measurement result #1, so that the measurement collection entity can find a measurement result #2 within the time period corresponding to the measurement result #1. The time identifier #2 may be absolute time corresponding to a moment at which the access network device delivers logged MDT measurement in the existing logged MDT and a time offset of a moment at which the measurement result #2 is recorded relative to the absolute time. The access network device includes the absolute time in a logged MDT measurement configuration delivered to the UE #2, and the UE #2 also includes the absolute time when reporting the logged MDT measurement result (namely, the measurement result #2). For example, if the time identifier #1 corresponding to the measurement result #1 is a moment t2-t3, and the time identifier #2 corresponding to the measurement result #2 is a moment t3, the measurement collection entity determines, based on the time identifiers t2-t3 and t3, that there is the correspondence between the measurement result #1 and the measurement result #2.

According to the solution provided in this embodiment of this application, the user equipment performs QoE measurement on the service in the idle state or the inactive state, and performs logged MDT measurement in an AS measurement manner in the current technology. The user equipment determines, based on the time identifiers or a measurement rule, the QoE measurement result and the AS measurement result that are in the correspondence, and sends the QoE measurement result and the AS measurement result that are in the correspondence to the network device, or sends the QoE measurement result and the AS measurement result that carry the corresponding time identifiers, and the network device determines the correspondence based on the time identifiers. In this way, a configuration of a RAN can be optimized, and user experience is improved.

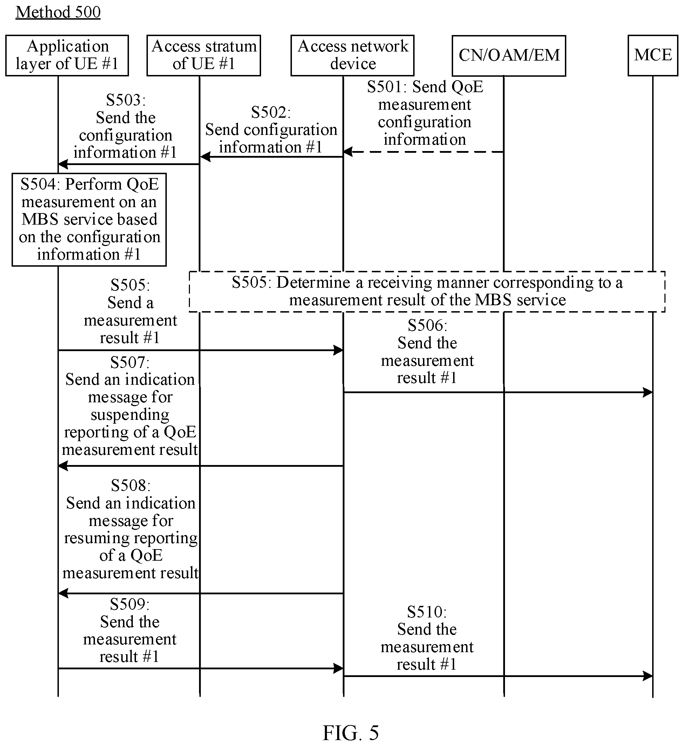

FIG. 5 is a schematic interaction diagram of a communication method applicable to an MBS service according to an embodiment of this application. The method 500 may include the following steps.

In this embodiment, for example, a service #A is the MBS service.

In a multimedia broadcast multicast service or a multicast broadcast service, for multicast, there are two transmission modes: a PTP mode and a PTM mode.

S501: A CN, an OAM, or an EM sends QoE measurement configuration information to an access network device.

Specific content included in the QoE measurement configuration information is basically the same as that of QoE measurement configuration information in a current technology. The QoE measurement configuration information includes a QoE measurement configuration, referred to as an application layer measurement configuration, and may further include other content, for example, a selection area range of the application layer measurement configuration and a service type corresponding to the application layer measurement configuration. This is not limited in this embodiment of this application. The application layer measurement configuration may be included in the QoE measurement configuration information in a form of a container, or may be included in the QoE measurement configuration information not in a form of a container. In a possible implementation, indication information #1 may be further sent, where the indication information #1 indicates to perform QoE measurement on the MBS service in an RRC_CONNECTED state. Optionally, the QoE measurement configuration information may further include an address and a task identifier that are of a measurement collection entity, where the task identifier is the same as that in step S201. Details are not described herein again. In a possible implementation, indication information #2 may be further sent, where the indication information #2 indicates to perform QoE measurement on a broadcast MBS, or the indication information #2 indicates to perform QoE measurement on a multicast MBS, or the indication information #2 indicates to perform QoE measurement on a broadcast MBS and a multicast MBS.

The access network device may alternatively have a function of determining configuration information #1 for UE #1. In this case, step S501 is an optional step.

S502: The access network device sends the configuration information #1 to the UE #1.

The configuration information #1 is the QoE measurement configuration of the MBS service. The OAM or the EM sends the QoE measurement configuration information to the access network device. The access network device may determine, based on the QoE measurement configuration information, the configuration information #1 for performing the MBS service by the UE #1 in an idle state or an inactive state. The QoE measurement configuration information sent by the OAM or the EM includes the configuration information #1.

For signaling-based QoE measurement, the access network device determines that the UE #1 supports the QoE measurement, and directly sends the configuration information #1 to the UE #1 specified by the CN. For management-based QoE measurement, the access network device selects accessed UE #1 according to a specific policy, determines that the UE #1 supports the QoE measurement, and then sends the configuration information #1 to the UE #1. For example, the policy is that the QoE measurement configuration information sent by the OAM to the access network carries the selection area range of the application layer measurement configuration, and the access network device selects only UE within the area range for the QoE measurement.

In a possible implementation, the access network device may send the configuration information #1 to the UE #1 by using a dedicated RRC message.

For example, the dedicated RRC message is an RRC reconfiguration message.

In a possible implementation, the access network device may further include the configuration information #1 of the MBS service when delivering an MBS service receiving configuration to the UE #1.

In a possible implementation, indication information #1 may be further sent, where the indication information #1 indicates to perform QoE measurement on the MBS service in an RRC_CONNECTED state.

In a possible implementation, indication information #2 may be further sent, where the indication information #2 indicates to perform QoE measurement on a broadcast MBS, or the indication information #2 indicates to perform QoE measurement on a multicast MBS, or the indication information #2 indicates to perform QoE measurement on a broadcast MBS and a multicast MBS.

S503: An access stratum of the UE #1 sends the configuration information #1 to an upper layer of the access stratum of the UE #1.

In this embodiment of this application, the access stratum of the UE #1 may be an RRC layer of the UE #1, another layer (for example, a PDCP layer, an RLC layer, a MAC layer, or a PHY layer) that performs AS measurement, or an AS measurement dedicated layer. The upper layer of the access stratum of the UE #1 may be an application layer, or may be a configured QoS measurement dedicated layer.

In a possible implementation, indication information #2 may be further sent, where the indication information #2 indicates to perform QoE measurement on a broadcast MBS, or the indication information #2 indicates to perform QoE measurement on a multicast MBS, or the indication information #2 indicates to perform QoE measurement on a broadcast MBS and a multicast MBS.

S504: The UE #1 performs QoE measurement in the RRC_CONNECTED state based on the configuration information #1 of the MBS service, to obtain a measurement result #1.

S505: The UE #1 sends the measurement result #1 of the MBS service to the access network device in the RRC_CONNECTED state.

S506: The access network device sends the measurement result #1 of the MBS service to the measurement collection entity.

The measurement result #1 is received in two modes: a broadcast mode or a multicast mode; and for multicast, there are two transmission modes: a PTP mode or a PTM mode. A base station or the measurement collection entity may obtain the receiving modes and the transmission modes in the following manners.

Manner 1: This is determined by the UE #1.

Specifically, in step S505, when sending the measurement result #1 of the MBS service to the access network device, the UE #1 includes indication information #8, where the indication information #8 indicates that the receiving mode is the broadcast mode or the multicast mode of receiving the MBS service corresponding to the measurement result #1.

In a possible implementation, if the indication information #8 indicates the multicast mode, indication information #9 may be further carried, where the indication information #9 indicates whether the PTP mode or the PTM mode in the multicast mode is used to the MBS service corresponding to the measurement result #1.

Manner 2: This is determined by the measurement collection entity.

Specifically, when receiving session start indication information of the MBS service, the upper layer of the access stratum of the UE #1 sends the session start indication information to the access stratum. The access stratum may send the session start indication information to the access network device. When sending the session start indication information to the measurement collection entity, the access network device also includes a time identifier #3, where the time identifier #3 indicates session start time, namely, QoE measurement start time. When receiving the measurement result #1 sent by the upper layer of the access stratum, the access stratum sends the measurement result #1 to the access network device. The access network device further sends, to the measurement collection entity, the measurement result #1 that carries a time identifier #1, where the time identifier #1 indicates a time period corresponding to the measurement result #1. Before the MBS service starts, when the access network device sends the configuration information #1, the access network device may further indicate whether the multicast mode or the broadcast mode is used by the UE #1 to receive the MBS service, and may also indicate whether the PTP mode or the PTM mode in the multicast mode is used to transmit the service. In addition, the access network device may also notify the measurement collection entity of a current mode of receiving the MBS service by the UE #1, and also includes a time identifier #4, where the time identifier #4 indicates a time period in which the MBS service is performed. The measurement collection entity may determine the receiving mode and the transmission mode of the measurement result #1 based on the time identifier #4 and the time identifier #1.

S507: The access network device sends, to the UE #1, an indication message for suspending reporting of a QoE measurement result.

Due to load of the access network device or another reason, the access network device may send, to the UE #1, the indication message for suspending the reporting of the measurement result #1.

Specifically, after receiving the indication message for the suspension, the access stratum of the UE #1 sends the indication message to the upper layer of the access stratum, and the upper layer of the access stratum suspends the reporting of the measurement result #1, but continues to perform QoE measurement, and stores the obtained measurement result #1.

AS measurement performed by the access stratum also continues. In addition, an AS measurement result #2 is continuously reported to the access network device based on a current technology in a connected state, and the access network device generates a time identifier #2, where the time identifier #2 is a second time period corresponding to the measurement result #2. Further, the access network device reports the measurement result #2 and the time identifier #2 to the measurement collection entity.

S508: The access network device sends, to the UE #1, an indication message for resuming reporting of a QoE measurement result.

After receiving the indication message for the resumption, the access stratum of the UE #1 sends the indication message to the upper layer of the access stratum, and the upper layer of the access stratum resumes the reporting of the measurement result #1.

Specifically, when sending the measurement result #1 to the access stratum, the upper layer of the access stratum of the UE #1 includes a time identifier #1, where the time identifier #1 indicates a first time period corresponding to the measurement result #1. Specific content is the same as that in Embodiment 1. To avoid repetition, details are not described again.

S509: The UE #1 sends the measurement result #1 to the access network device.

Optionally, the UE #1 further sends the time identifier #1 to the access network device.

S510: The access network device sends the measurement result #1 to the measurement collection entity.

Optionally, the access network device further sends the time identifier #1 to the measurement collection entity.

In a possible implementation, the measurement collection entity determines, based on the time identifier #1 and the time identifier #2, that there is a correspondence between the measurement result #1 and the measurement result #2.

In this embodiment of this application, a measurement manner and an obtaining manner of the measurement result #2 are not limited. For example, the measurement result #2 may be obtained in an immediate MDT manner. After obtaining the AS measurement result in the immediate MDT manner, when sending the AS measurement result to the measurement collection entity, the access network also includes the time identifier #2.

In a possible implementation, the measurement collection entity determines a corresponding measurement result #2 based on a sequence of the measurement result #1.

In a possible implementation, the measurement collection entity may obtain a QoE measurement periodicity, determine, based on the time periodicity and the reporting sequence, a time period corresponding to the measurement result #1, and then determine a correspondence based on the time period and the time period corresponding to the measurement result #2.

For example, if the measurement periodicity is 5 seconds, the measurement collection entity receives the measurement result #1 every 5 seconds, and the measurement collection entity may determine that a time period corresponding to each measurement result #1 is the 5 seconds, and associate the measurement result #1 with a measurement result #2 stored in each 5 seconds periodicity. That is, the measurement collection entity knows, based on the periodicity information, the time period corresponding to each subsequently received measurement result #1, so that the measurement collection entity can find the measurement result #2 within the time period corresponding to the measurement result #1. For example, if the measurement collection entity receives the indication information #2 at a moment t1, and receives an n^{th} measurement result #1 within t1+n*5 seconds, the n^{th} measurement result #1 is associated with a measurement result #2 stored within t1+(n-1)*5 to t1+n*5 seconds.

In this embodiment, this solution of associating the measurement result when the reporting of the QoE measurement in the connected state is suspended and this solution of determining a sending manner corresponding to the QoE measurement result may be separately implemented based on an actual requirement, and do not necessarily need to be completely coupled with all solution steps for implementation. This is not limited in this embodiment of this application.

According to the solutions provided in this embodiment of this application, when the reporting of the QoE measurement performed by the user equipment in the connected state is suspended,
the user equipment performs QoE measurement, stores the measurement result, and stores the corresponding time identifier; and when the reporting is resumed, sends the QoE measurement result and the time identifier to the measurement collection entity, and the measurement collection entity determines the corresponding AS measurement result based on the time identifier. In addition, a network side may determine, based on a requirement, the sending manner corresponding to the QoE measurement result. In this way, a configuration of a RAN can be targetedly optimized, and user experience is improved.

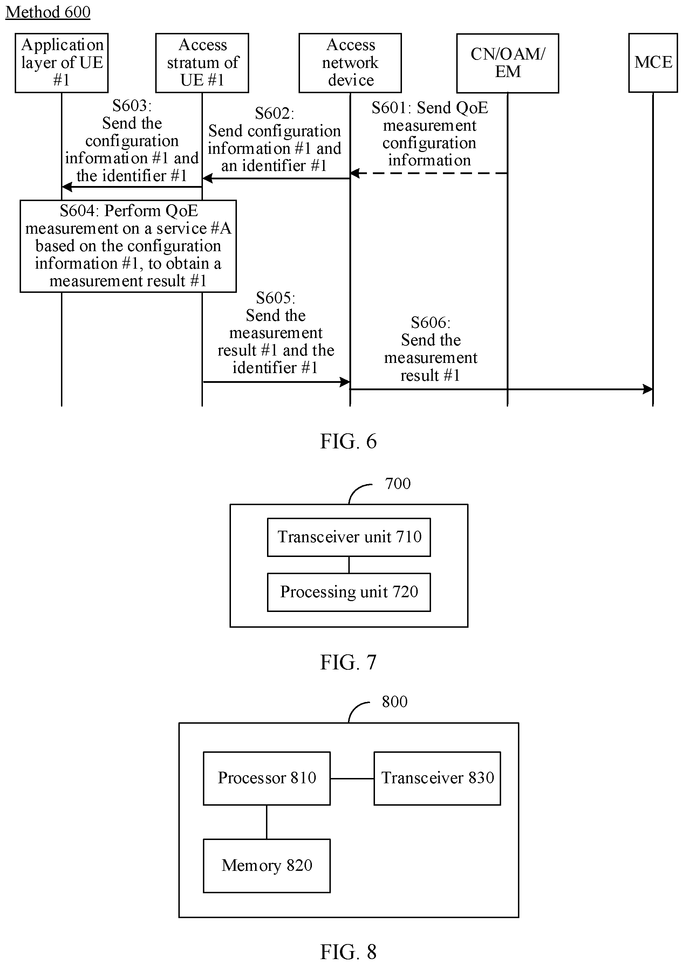

FIG. 6 is a schematic interaction diagram of a communication method applicable to an embodiment of this application. The method 600 may include the following steps.

In this embodiment, for example, a service #A is an MBS service. The service #A may alternatively be another service. This is not limited in this embodiment. In this embodiment, when a network side device provides different measurement collection entities for different customers or service providers, QoE measurement results for the service #A need to be sent to the measurement collection entities corresponding to the corresponding customers or the service providers for processing.

S601: A CN, an OAM, or an EM sends QoE measurement configuration information to an access network device.

Specific content included in the QoE measurement configuration information is basically the same as that of QoE measurement configuration information in a current technology. The QoE measurement configuration information includes a QoE measurement configuration, referred to as an application layer measurement configuration, and may further include other content, for example, a selection area range of the application layer measurement configuration and a service type corresponding to the application layer measurement configuration. This is not limited in this embodiment of this application. The application layer measurement configuration may be included in the QoE measurement configuration information in a form of a container, or may be included in the QoE measurement configuration information not in a form of a container. Optionally, the QoE measurement configuration information may further include an address and a task identifier that are of the measurement collection entity, where the task identifier is the same as that in step S201. Details are not described herein again.

In a possible implementation, for different customers or a plurality of service providers, a network side (for example, the CN, the OAM, or the EM) may send a plurality of pieces of QoE measurement configuration information to the access network device. The plurality of pieces of QoE measurement configuration information may be carried in one message for sending, or may be separately sent.

The access network device may alternatively have a function of determining configuration information #1 for UE #1. In this case, step S601 is an optional step.

S602: The access network device sends the configuration information #1 to the UE #1.

The configuration information #1 is the QoE measurement configuration of the service #A. The OAM or the EM sends the QoE measurement configuration information to the access network device. The access network device may determine, based on the QoE measurement configuration information, the configuration information #1 for performing the service #A by the UE #1. The QoE measurement configuration information sent by the OAM or the EM includes the configuration information #1.

For signaling-based QoE measurement, the access network device determines that the UE #1 supports the QoE measurement, and directly sends the configuration information #1 to the UE #1 specified by the CN. For management-based QoE measurement, the access network device selects accessed UE #1 according to a specific policy, determines that the UE #1 supports the QoE measurement, and then sends the configuration information #1 to the UE #1. For example, the policy is that the QoE measurement configuration information sent by the OAM to the access network carries the selection area range of the application layer measurement configuration, and the access network device selects only UE within the area range for the QoE measurement.

In a possible implementation, the access network device may send the configuration information #1 to the UE #1 by using a dedicated RRC message.

For example, the dedicated RRC message is an RRC reconfiguration message.

In a possible implementation, the access network device may configure a plurality of QoE measurement configurations for the UE #1 or configure QoE measurement configurations of different customers or service providers for different UE. In other words, the access network device may send a plurality of pieces of configuration information #1 to the UE #1, where different configuration information #1 includes different QoE measurement configurations.

When receives a QoE measurement result from the UE #1, the access network device needs to know QoE measurement configuration information corresponding to the QoE measurement result, so that the access network device may send the QoE measurement result to a measurement collection entity corresponding to a customer or a service provider.

In a possible implementation, when sending the configuration information #1 to the UE #1, the access network device may further include an identifier #1.

Specifically, the access network device may allocate the corresponding identifier #1 to the configuration information #1. The identifier #1 is used to index configuration information #1 that carries different QoE measurement configurations. The identifier #1 may be a local identifier, and a length of the identifier may be a 1-byte character string. In this case, signaling overheads between the access network device and the UE #1 are relatively small.

In addition, when the access network device needs to release or suspend QoE measurement performed by the UE #1, and sends, to the UE #1, a command for releasing or suspending the QoE measurement the access network device includes an identifier #1 corresponding to the QoE measurement, to indicate to release or suspend the QoE measurement, in other words, to indicate the UE #1 to release or suspend the QoE measurement corresponding to configuration information #1 indexed by using the identifier #1.

S603: An access stratum of the UE #1 sends the configuration information #1 to an upper layer of the access stratum of the UE #1.

In this embodiment of this application, the access stratum of the UE #1 may be an RRC layer of the UE #1, another layer (for example, a PDCP layer, an RLC layer, a MAC layer, or a PHY layer) that performs AS measurement, or an AS measurement dedicated layer. The upper layer of the access stratum of the UE #1 may be an application layer, or may be a configured QoS measurement dedicated layer.

When sending the configuration information #1 to the upper layer of the access stratum of the UE #1, the access stratum of the UE #1 also sends the identifier #1 corresponding to the configuration information #1.

In addition, when the UE #1 receives, from the access network device, the command that is for releasing or suspending the QoE measurement and that carries the identifier #1, the access stratum of the UE #1 sends, to the upper layer of the access stratum, the command that is for releasing or suspending the QoE measurement and that carries the identifier #1. The upper layer of the access stratum of the UE #1 can know, based on the command for releasing or suspending the QoE measurement and the identifier #1, specific QoE measurement that corresponds to a QoE measurement configuration and that is to be released or suspended.

S604: The UE #1 performs QoE measurement based on the configuration information #1, to obtain a measurement result #1.

The UE #1 may perform QoE measurement in an RRC_CONNECTED state or an RRC_IDLE/RRC_INACTIVE state. This is not limited in this application.

After obtaining the measurement result #1, the upper layer of the access stratum of the UE #1 also includes the identifier #1 while sending the measurement result #1 to the access stratum.

S605: The UE #1 sends the measurement result #1 to the access network device.

When sending the measurement result #1 to the access network device, the UE #1 also includes the corresponding identifier #1.

S606: The access network device sends the measurement result #1 to the measurement collection entity.

The access network device obtains, based on the identifier #1 corresponding to the measurement result #1, a measurement collection entity corresponding to the measurement result #1, so that the access network device sends the measurement result #1 to the corresponding measurement collection entity. For example, the access network device obtains, according to a correspondence between the identifier #1 and a measurement collection entity, the measurement collection entity corresponding to the measurement result #1.

In a possible implementation, the access network device may obtain the correspondence between the identifier #1 and the measurement collection entity in the following manners.

### Manner 1:

When the UE performs QoE measurement in the RRC _CONNECTED or RRC _INACTIVE state, and the access network device (referred to as a source access network device) that sends the configuration information #1 to the UE #1 and the access network device (referred to as a target access network device) that receives the measurement result #1 from the UE #1 are not a same access network device, or the UE #1 trigger a handover of the access network device after receiving the configuration information #1, in other words, a source access network device is handed over to a target access network device, the source access network device sends the correspondence between the identifier #1 and the measurement collection entity to the target access network device. For example, the source access network device may include the correspondence between the identifier #1 and the measurement collection entity when sending a handover request message to the target access network device. The correspondence may be, for example, a correspondence between the identifier #1 and the task identifier, or a correspondence between the identifier #1 and the address of the measurement collection entity, where the task identifier is an identifier corresponding to the configuration information #1. In this way, the target access network device can obtain the correspondence between the identifier #1 and the measurement collection entity. When receiving the measurement result #1 and the identifier #1 from the UE #1, the target access network device determines, based on the correspondence between the identifier #1 and the measurement collection entity, the measurement collection entity corresponding to the measurement result #1.

### Manner 2:

When the UE performs QoE measurement in the RRC_IDLE state or the RRC_INACTIVE state, each access network device stores a correspondence between the identifier #1 and a measurement collection entity, for example, each access network device pre-configures the correspondence between the identifier #1 and the measurement collection entity; or the OAM or EM sends the correspondence between the identifier #1 and the measurement collection entity to each access network device in advance. In this way, when receiving the measurement result #1 and the identifier #1 from the UE #1, the target access network device determines, based on the correspondence between the identifier #1 and the measurement collection entity, the measurement collection entity corresponding to the measurement result #1. According to the solution provided in this embodiment of this application, when the network side device provides different measurement collection entities for different customers or service providers, and the access network device receives a QoE measurement result from a terminal device, a measurement collection entity corresponding to the QoE measurement result can be determined based on a correspondence between identifiers corresponding to different measurement configurations and the measurement collection entities, so that a customer or a service provider can accurately obtain the corresponding QoE measurement result, and signaling overheads between the access network device and the terminal device are further reduced.

Embodiments described in this specification may be independent solutions, or may be combined based on internal logic. All these solutions fall within the protection scope of this application.

The steps in the foregoing embodiments are merely a possible implementation. This is not limited in embodiments of this application.

It may be understood that in the foregoing method embodiments, the methods and operations that are implemented by the user equipment may alternatively be implemented by a component (for example, a chip or a circuit) that may be used in the user equipment, and the methods and the operations that are implemented by the access network device (for example, a RAN node) may alternatively be implemented by a component (for example, a chip or a circuit) that may be used in the access network device.

The foregoing mainly describes the solutions provided in embodiments of this application from a perspective of interaction. It may be understood that, to implement the foregoing functions, each network element such as a transmit end device or a receive end device includes a corresponding hardware structure and/or software module for performing each function. A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the transmit end device or the receive end device may be divided into functional modules based on the foregoing method examples. For example, each functional module may be obtained through division corresponding to each function, or two or more functions may be integrated into one processing module. The integrated module may be implemented in a form of hardware, or may be implemented in a form of a software functional module. It should be noted that, in embodiments of this application, the division into the modules is an example, and is merely a logical function division. During actual implementation, another division manner may be used. Descriptions are provided below by using an example in which each functional module is obtained through division corresponding to each function.

The foregoing describes, in detail with reference to FIG. 3 to FIG. 6, the methods provided in embodiments of this application. The following describes, in detail with reference to FIG. 7 and FIG. 8, apparatuses provided in embodiments of this application. Descriptions of the apparatus embodiments correspond to the descriptions of the method embodiments. Therefore, for content not described in detail, refer to the foregoing method embodiments. For brevity, details are not described herein again.

FIG. 7 is a schematic block diagram of a communication apparatus according to an embodiment of this application. The communication apparatus 700 includes a transceiver unit 710 and a processing unit 720. The transceiver unit 710 may implement a corresponding communication function, and the processing unit 720 is configured to perform data processing, so that the communication apparatus implements the foregoing method embodiments. The transceiver unit 710 may also be referred to as a communication interface or a communication unit.

Optionally, the communication apparatus 700 may further include a storage unit. The storage unit may be configured to store instructions and/or data. The processing unit 720 may read the instructions and/or the data in the storage unit, to enable the communication apparatus to implement the foregoing method embodiments.

Specifically, the communication apparatus 700 may be any device in this application, for example, may be user equipment UE #1 or an access network device, and may implement a function that can be implemented by the device. The communication apparatus 700 may be a physical device, a component (for example, an integrated circuit or a chip) of a physical device, or may be a functional module in a physical device.

The communication apparatus 700 may be configured to perform actions performed by the user equipment UE #1 in the foregoing method embodiment. In this case, the communication apparatus 700 may be user equipment or a component that may be configured in user equipment. The transceiver unit 710 is configured to perform a receiving/sending-related operation on a user equipment side in the foregoing method embodiment. The storage unit 720 is configured to perform a data or instruction storage-related operation on the user equipment side in the foregoing method embodiment. The processing unit 730 is configured to perform a processing-related operation on the user equipment side in the foregoing method embodiment.

Alternatively, the communication apparatus 700 may be configured to perform actions performed by the access network device in the foregoing method embodiment. In this case, the communication apparatus 700 may be an access network device or a component that may be configured in an access network device. The transceiver unit 710 is configured to perform a receiving/sending-related operation on an access network device side in the foregoing method embodiment. The storage unit 720 is configured to perform a data or instruction storage-related operation on the access network device side in the foregoing method embodiment. The processing unit 730 is configured to perform a processing-related operation on the access network device side in the foregoing method embodiment.

In a design, the communication apparatus 700 is configured to perform actions performed by the UE #1 in the embodiment shown in FIG. 3. The processing unit 730 is configured to perform application layer measurement and access stratum measurement on a first service in an idle state or an inactive state, to obtain a first measurement result and a second measurement result. The transceiver unit 710 is configured to send, in a connected state, the first measurement result and the second measurement result to a first network device, where there is a correspondence between the first measurement result and the second measurement result.

The communication apparatus 700 may implement steps or procedures that are performed by the user equipment and that correspond to the method 300, the method 400, and the method 500 according to embodiments of this application. The communication apparatus 700 may include units configured to perform the methods performed by the user equipment in the method 300 in FIG. 3, the method 400 in FIG. 4, and the method 500 in FIG. 5. In addition, the units in the communication apparatus 700 and the foregoing other operations and/or functions are separately intended to implement corresponding procedures of the method 300 in FIG. 3, the method 400 in FIG. 4, and the method 500 in FIG. 5.

When the communication apparatus 700 is configured to perform the method 300 in FIG. 3, the transceiver unit 710 may be configured to perform step 302, step 303, and step 306 in the method 300, and the processing unit 720 may be configured to perform step 304 and step 305 in the method 300.

When the communication apparatus 700 is configured to perform the method 400 in FIG. 4, the transceiver unit 710 may be configured to perform step 402, step 403, and step 406 in the method 400, and the processing unit 720 may be configured to perform step 404 and step 405 in the method 400.

When the communication apparatus 700 is configured to perform the method 500 in FIG. 5, the transceiver unit 710 may be configured to perform step 502, step 503, step 505, step 507, step 508, and step 509 in the method 500, and the processing unit 720 may be configured to perform step 504 and step 505 in the method 500.

A specific process in which the units perform the foregoing corresponding steps is described in detail in the foregoing method embodiments. For brevity, details are not described herein again.

In another design, the communication apparatus 700 is configured to perform actions performed by the access network device in the embodiment shown in FIG. 3, and the transceiver unit 710 is configured to: receive a first measurement result and a second measurement result that are of a first service and that are sent by user equipment. The transceiver unit is further configured to send the first measurement result and the second measurement result, where there is a correspondence between the first measurement result and the second measurement result. The processing unit 730 is configured to determine that there is the correspondence between the first measurement result and the second measurement result.

The communication apparatus 700 may implement steps or procedures that are performed by the access network device and that correspond to the method 300, the method 400, and the method 500 according to embodiments of this application. The communication apparatus 700 may include units configured to perform the methods performed by the access network device in the method 300 in FIG. 3, the method 400 in FIG. 4, and the method 500 in FIG. 5. In addition, the units in the communication apparatus 700 and the foregoing other operations and/or functions are separately intended to implement corresponding procedures of the method 300 in FIG. 3, the method 400 in FIG. 4, and the method 500 in FIG. 5.

When the communication apparatus 700 is configured to perform the method 300 in FIG. 3, the transceiver unit 710 may be configured to perform step 301, step 302, and step 306 in the method 300.

When the communication apparatus 700 is configured to perform the method 400 in FIG. 4, the transceiver unit 710 may be configured to perform step 401, step 402, and step 406 in the method 400.

When the communication apparatus 700 is configured to perform the method 500 in FIG. 5, the transceiver unit 710 may be configured to perform step 501, step 502, step 506, step 507, step 508, step 509, and step 510 in the method 500, and the processing unit 720 may be configured to perform step 505 in the method 500.

A specific process in which the units perform the foregoing corresponding steps is described in detail in the foregoing method embodiments. For brevity, details are not described herein again.

The processing unit 720 in the foregoing embodiment may be implemented by at least one processor or a processor-related circuit. The transceiver unit 710 may be implemented by a transceiver or a transceiver-related circuit. The transceiver unit 710 may also be referred to as a communication unit or a communication interface. The storage unit may be implemented by using at least one memory.

As shown in FIG. 8, an embodiment of this application further provides a communication apparatus 800. The communication apparatus 800 includes a processor 810. The processor 810 is coupled to a memory 820. The memory 820 is configured to store a computer program or instructions and/or data. The processor 810 is configured to execute the computer program or the instructions and/or the data stored in the memory 820. The communication apparatus 800 further includes a transceiver 830. The transceiver 830 is configured to receive and/or send a signal. For example, the processor 810 is configured to control the transceiver 830 to receive and/or send a signal, so that the method in the foregoing method embodiment is performed.

Optionally, the communication apparatus 800 includes one or more processors 810.

Optionally, as shown in FIG. 8, the communication apparatus 800 may further include the memory 820.

Optionally, the communication apparatus 800 may include one or more memories 820.

Optionally, the memory 820 may be integrated with the processor 810, or separately disposed.

In a solution, the communication apparatus 800 is configured to perform operations performed by the user equipment in the foregoing method embodiments.

For example, the processor 810 is configured to implement a processing-related operation performed by the user equipment in the foregoing method embodiments, and the transceiver 830 is configured to implement a receiving/sending-related operation performed by the user equipment in the foregoing method embodiments.

In another solution, the communication apparatus 800 is configured to perform operations performed by the access network device in the foregoing method embodiments.

For example, the processor 810 is configured to implement a processing-related operation performed by the access network device in the foregoing method embodiments, and the transceiver 830 is configured to implement a receiving/sending-related operation performed by the access network device in the foregoing method embodiments.

It should be noted that the foregoing method embodiments of this application may be applied to a processor, or may be implemented by a processor. The processor may be an integrated circuit chip with a signal processing capability. During implementation, steps in the foregoing method embodiments can be implemented by using a hardware integrated logical circuit in the processor, or instructions in a form of software. The processor may be a general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or a transistor logic device, or a discrete hardware component. The processor may implement or perform the methods, the steps, and the logical block diagrams that are disclosed in embodiments of this application. The general-purpose processor may be a microprocessor, or the processor may be any conventional processor, or the like. The steps in the methods disclosed with reference to embodiments of this application may be directly executed and completed by using a hardware decoding processor, or may be executed and completed by using a combination of hardware and software modules in a decoding processor. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory in the systems and methods described in this specification includes but is not limited to these and any memory of another proper type.

Aspects or features of this application may be implemented as a method, an apparatus, or a product that uses standard programming and/or engineering technologies. The term "product" used in this application covers a computer program that can be accessed from any computer-readable component, carrier or medium. For example, a computer-readable medium may include but is not limited to: a magnetic storage device (for example, a hard disk, a floppy disk, or a magnetic tape), an optical disc (for example, a compact disc (compact disc, CD) or a digital versatile disc (digital versatile disc, DVD)), or a smart card and a flash memory device (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, include and/or carry instructions and/or data. The term "and/or" in this specification describes only an association relationship for describing associated objects and indicates that three relationships may exist. For example, A and/or B may represent the following three cases: Only A exists, both A and B exist, and only B exists. In addition, the character "/" in this specification usually indicates an "or" relationship between the associated objects.

Sequence numbers of the foregoing processes do not mean execution sequences in embodiments of this application. The execution sequences of the processes should be determined based on functions and internal logic of the processes, and should not be constructed as any limitation on the implementation processes of embodiments of this application.

A person of ordinary skill in the art may be aware that, with reference to the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing system, apparatus, and unit, refer to corresponding processes in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate components may or may not be physically separate, and components displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computer device (which may be a personal computer, a server, a network device, or the like) to perform all or some of the steps in the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
performing, by user equipment, application layer measurement and access stratum measurement on a first service in an idle state or an inactive state, to obtain a first measurement result and a second measurement result, wherein the first measurement result comprises an application layer measurement result obtained by the user equipment in a first time period, the second measurement result comprises an access stratum measurement result obtained by the user equipment in a second time period, and the first time period overlaps the second time period; and
sending, by the user equipment in a connected state, the first measurement result and the second measurement result to a first network device, wherein there is a correspondence between the first measurement result and the second measurement result.

2. The method according to claim 1, wherein the method further comprises:
sending, by the user equipment in the connected state, first information to the first network device, wherein the first information indicates that there is the correspondence between the first measurement result and the second measurement result.

3. The method according to claim 1 or 2, wherein the method further comprises:
determining, by the user equipment, that there is the correspondence between the first measurement result and the second measurement result.

4. The method according to claim 3, wherein before the determining, by the user equipment, that there is the correspondence between the first measurement result and the second measurement result, the method further comprises:
determining, by the user equipment, a first time identifier and a second time identifier, wherein the first time identifier is moment information sent by an upper layer of an access stratum to the access stratum of the user equipment when the access stratum of the user equipment receives the first measurement result from the upper layer of the access stratum, the second time identifier is moment information recorded when a terminal device obtains the second measurement result, the first time identifier is used to determine a time period corresponding to the first measurement result, and the second time identifier is used to determine a time period corresponding to the second measurement result.

5. The method according to claim 4, comprising:
determining, by the user equipment based on the first time identifier and the second time identifier, that there is the correspondence between the first measurement result and the second measurement result.

6. The method according to claim 3, wherein the determining, by the user equipment, that there is the correspondence between the first measurement result and the second measurement result comprises:
receiving, by the user equipment, periodicity information sent by a second network device, wherein the periodicity information comprises a periodicity in which the user equipment performs application layer measurement on the first service; and
determining, by the user equipment based on the periodicity information, a time period corresponding to the first measurement result.

7. The method according to any one of claims 1 to 6, wherein the method further comprises:
starting, by the access stratum of the user equipment, access stratum measurement after receiving first indication information from the upper layer of the access stratum, wherein the first indication information is session start indication information of the first service.

8. The method according to claim 3, wherein the determining, by the user equipment, that there is the correspondence between the first measurement result and the second measurement result comprises:
when an access stratum of the user equipment receives the first measurement result from an upper layer of the access stratum, using, by the access stratum of the user equipment, a second measurement result generated between receiving an application layer measurement result last time and receiving the first measurement result as the second measurement result; or
using, by an access stratum of the user equipment, a second measurement result generated between receiving first indication information and receiving the first measurement result as the second measurement result.

9. The method according to any one of claims 1 to 8, comprising:
sending, by the access stratum of the user equipment in the connected state, second indication information to the upper layer of the access stratum, wherein the second indication information indicates that the user equipment enters the connected state or indicates the upper layer of the access stratum to transmit the first measurement result.

10. The method according to any one of claims 1 to 8, comprising:
after the user equipment enters the connected state, sending, by the access stratum of the user equipment in the connected state, third indication information to the first network device, wherein the third indication information indicates that measurement configuration information for performing first measurement in the idle state or the inactive state is configured for the user equipment;
configuring, by the first network device for the user equipment, a radio signaling bearer for transmitting the first measurement result; and
sending, by the access stratum of the user equipment, fourth indication information to the upper layer of the access stratum, wherein the fourth indication information indicates the upper layer of the access stratum to transmit the first measurement result.

11. A communication method, comprising:
receiving, by a first network device, a first measurement result and a second measurement result that are of a first service and that are sent by user equipment, wherein the first measurement result comprises an application layer measurement result obtained by the user equipment in a first time period in an idle state or an inactive state, the second measurement result comprises an access stratum measurement result obtained by the user equipment in a second time period in the idle state or the inactive state, and the first time period overlaps the second time period; and
sending, by the first network device, the first measurement result and the second measurement result, wherein there is a correspondence between the first measurement result and the second measurement result.

12. The method according to claim 11, wherein the method further comprises:
receiving, by the first network device, first information, wherein the first information indicates that there is the correspondence between the first measurement result and the second measurement result.

13. The method according to claim 11, wherein the method further comprises:
determining, by an access network device, that there is the correspondence between the first measurement result and the second measurement result.

14. The method according to claim 11, comprising:
receiving, by the first network device, third indication information sent by an access stratum of the user equipment, wherein the third indication information indicates that measurement configuration information for performing first measurement in the idle state or the inactive state is configured for the user equipment; and
configuring, by the first network device for the user equipment, a radio signaling bearer for transmitting the first measurement result.

15. A communication method, comprising:
performing, by user equipment, application layer measurement and access stratum measurement on a first service;
generating, by the user equipment, a first measurement result and a first time identifier when suspending reporting of an application layer measurement result, wherein the first time identifier is a first time period corresponding to the first measurement result; and
sending, by the user equipment, the first measurement result and the first time identifier when resuming the reporting of the application layer measurement result.

16. A communication method, comprising:
receiving, by a first network device, a first measurement result and a first time identifier that are of a first service and that are sent by user equipment, wherein the first measurement result comprises an application layer measurement result obtained by the user equipment in a first time period, and the first time identifier is a first time period corresponding to the first measurement result; and
sending, by the first network device, the first measurement result and the first time identifier.

17. The method according to claim 16, wherein the method further comprises:
when the user equipment suspends reporting of the application layer measurement result, receiving, by the first network device, a second measurement result sent by the user equipment, and generating a second time identifier, wherein the second measurement result comprises an application layer measurement result obtained by the user equipment in a second time period, the second time identifier is a second time period corresponding to the second measurement result, and the second time period overlaps the first time period; and
determining, by the first network device based on the first time identifier and the second time identifier, that there is a correspondence between the first measurement result and the second measurement result.

18. The method according to claim 16 or 17, wherein the method further comprises:
sending, by the first network device, the first measurement result and the second measurement result, wherein there is the correspondence between the first measurement result and the second measurement result.

19. The method according to claim 16, wherein the method further comprises:
sending, by the first network device, the second measurement result and the second time identifier.

20. A communication apparatus, comprising:
a processing unit, configured to perform application layer measurement and access stratum measurement on a first service in an idle state or an inactive state, to obtain a first measurement result and a second measurement result, wherein the first measurement result comprises an upper-layer measurement result of an access stratum obtained by user equipment in a first time period, the second measurement result comprises an access stratum measurement result obtained by the user equipment in a second time period, and the first time period overlaps the second time period; and
a transceiver unit, configured to send, in a connected state, the first measurement result and the second measurement result to a first network device, wherein there is a correspondence between the first measurement result and the second measurement result.

21. The communication apparatus according to claim 20, wherein the transceiver unit is further configured to send, in the connected state, first information to the first network device, wherein the first information indicates that there is the correspondence between the first measurement result and the second measurement result.

22. The communication apparatus according to claim 20 or 21, wherein the processing unit is further configured to determine that there is the correspondence between the first measurement result and the second measurement result.

23. The communication apparatus according to claim 22, wherein the processing unit is specifically configured to determine a first time identifier and a second time identifier, wherein the first time identifier is moment information sent by an upper layer of the access stratum to the access stratum of the user equipment when the access stratum of the user equipment receives the first measurement result from the upper layer of the access stratum, the second time identifier is moment information recorded when a terminal device obtains the second measurement result, the first time identifier is used to determine a time period corresponding to the first measurement result, and the second time identifier is used to determine a time period corresponding to the second measurement result.

24. The communication apparatus according to claim 23, wherein the processing unit determines, based on the first time identifier and the second time identifier, that there is the correspondence between the first measurement result and the second measurement result.

25. The communication apparatus according to claim 22, wherein the transceiver unit is configured to receive periodicity information sent by a second network device, wherein the periodicity information comprises a periodicity in which the user equipment performs application layer measurement on the first service; and
the processing unit is further configured to determine, based on the periodicity information, a time period corresponding to the first measurement result.

26. The communication apparatus according to any one of claims 19 to 25, wherein the processing unit is further configured to start access stratum measurement after receiving first indication information from the upper layer of the access stratum, wherein the first indication information is session start indication information of the first service.

27. The communication apparatus according to claim 22, wherein when the processing unit receives the first measurement result from an upper layer of the access stratum, the access stratum of the user equipment uses a second measurement result generated between receiving an application layer measurement result last time and receiving the first measurement result as the second measurement result; or
the processing unit is configured to use a second measurement result generated between receiving first indication information and receiving the first measurement result as the second measurement result.

28. The communication apparatus according to any one of claims 19 to 27, wherein the transceiver unit is configured to send, in the connected state, second indication information to the upper layer of the access stratum, wherein the second indication information indicates that the user equipment enters the connected state or indicates the upper layer of the access stratum to transmit the first measurement result.

29. The communication apparatus according to any one of claims 19 to 27, wherein after the user equipment enters the connected state, the access stratum of the user equipment in the connected state sends third indication information to the first network device, wherein the third indication information indicates that measurement configuration information for performing first measurement in the idle state or the inactive state is configured for the user equipment;
the processing apparatus is configured to configure, for the user equipment, a radio signaling bearer for transmitting the first measurement result; and
the transceiver unit is further configured to send fourth indication information to the upper layer of the access stratum, wherein the fourth indication information indicates the upper layer of the access stratum to transmit the first measurement result.

30. A communication apparatus, comprising:
a transceiver unit, configured to receive a first measurement result and a second measurement result that are of a first service and that are sent by user equipment, wherein the first measurement result comprises an application layer measurement result obtained by the user equipment in a first time period in an idle state or an inactive state, the second measurement result comprises an access stratum measurement result obtained by the user equipment in a second time period in the idle state or the inactive state, and the first time period overlaps the second time period; and
the transceiver unit is further configured to send the first measurement result and the second measurement result, wherein there is a correspondence between the first measurement result and the second measurement result.

31. The communication apparatus according to claim 30, wherein the transceiver unit is further configured to receive first information, wherein the first information indicates that there is the correspondence between the first measurement result and the second measurement result.

32. The communication apparatus according to claim 30, comprising:
a processing unit, configured to determine that there is the correspondence between the first measurement result and the second measurement result.

33. The communication apparatus according to claim 30, wherein the transceiver unit is further configured to receive third indication information sent by an access stratum of the user equipment, wherein the third indication information indicates that measurement configuration information for performing first measurement in the idle state or the inactive state is configured for the user equipment; and
the processing unit is further configured to configure, for the user equipment, a radio signaling bearer for transmitting the first measurement result.

34. A communication apparatus, comprising:
a processing unit, configured to perform application layer measurement and access stratum measurement on a first service, wherein
the processing unit is further configured to generate a first measurement result and a first time identifier when the user equipment suspends reporting of an application layer measurement result, wherein the first time identifier is a first time period corresponding to the first measurement result; and
a sending unit, configured to send the first measurement result and the first time identifier when the user equipment resumes the reporting of the application layer measurement result.

35. A communication apparatus, comprising:
a transceiver unit, configured to receive a first measurement result and a first time identifier that are of a first service and that are sent by user equipment, wherein the first measurement result comprises an application layer measurement result obtained by the user equipment in a first time period, and the first time identifier is a first time period corresponding to the first measurement result; and
the transceiver unit is further configured to send the first measurement result and the first time identifier.

36. The communication apparatus according to claim 35, wherein when the user equipment suspends reporting of the application layer measurement result, the transceiver unit is further configured to: receive a second measurement result sent by the user equipment, and generate a second time identifier, wherein the second measurement result comprises an application layer measurement result obtained by the user equipment in a second time period, the second time identifier is a second time period corresponding to the second measurement result, and the second time period overlaps the first time period; and
a processing unit is configured to determine, based on the first time identifier and the second time identifier, that there is the correspondence between the first measurement result and the second measurement result.

37. The communication apparatus according to claim 35 or 36, wherein the transceiver unit is further configured to send the first measurement result and the second measurement result, wherein there is the correspondence between the first measurement result and the second measurement result.

38. The communication apparatus according to claim 35, wherein the transceiver unit is further configured to send the second measurement result and the second time identifier.

39. A communication apparatus, comprising:
a memory, configured to store computer instructions; and
a processor, configured to execute the computer instructions stored in the memory, so that the communication apparatus performs the method according to any one of claims 1 to 19.

40. A computer-readable storage medium, wherein the computer-readable storage medium stores a computer program, and when the computer program is executed by a communication apparatus, the communication apparatus is enabled to perform the method according to any one of claims 1 to 19.
